# EUROPEAN PATENT SPECIFICATION

(11) **EP 4 216 566 B1**
(45) Date of publication and mention of the grant of the patent: **30.07.2025**
(21) Application number: 21884620.2
(22) Date of filing: 25.08.2021
(51) Int. Cl.: H04Q 11/00

(54) **MULTI-LEVEL PON MANAGEMENT METHOD**
MEHRSTUFIGES PON-VERWALTUNGSVERFAHREN
PROCÉDÉ DE GESTION DE PON MULTI-NIVEAU

(30) Priority: 30.10.2020 CN 202011197591
(43) Date of publication of application: 26.07.2023
(73) Proprietor: Huawei Technologies Co., Ltd., Shenzhen, Guangdong 518129 (CN)
(72) Inventor: ZHENG, Gang, Shenzhen, Guangdong 518129 (CN)
(74) Representative: Isarpatent
(86) International application number: PCT/CN2021/114487
(87) International publication number: WO 2022/088888

(56) References cited:
- EP-A1- 2 106 064
- CN-A- 101 047 445
- CN-A- 101 304 281
- CN-A- 102 027 700
- CN-A- 103 109 544
- CN-A- 110 809 203
- JP-A- 2004 007 178
- KR-A- 20130 031 438
- US-B1- 8 244 139
- CHEN , MING-LIANG: "Study on Technique of Interconnect Networks and Burst Assemble Mechanism Based on Intergraded Node", CHINA MASTER’S THESES FULL-TEXT DATABASE, 1 March 2011 (2011-03-01), pages 1 - 70, XP055924954

## Description

Priority is claimed to Chinese Patent Application No. 202011197591.8, published as CN114531622 (A), and filed with the China National Intellectual Property Administration on October 30, 2020 and entitled "MULTI-LEVEL PON NETWORK MANAGEMENT METHOD AND RELATED APPARATUS".

### TECHNICAL FIELD

This disclosure generally relates to the optical network field, and the invention in particular relates to a multi-level PON network management methods, a primary user-side device, and an optical line terminal, OLT.

### BACKGROUND

A passive optical network (passive optical network, PON) is a single-fiber bidirectional optical access network that uses a point to multipoint (point to multipoint, P2MP) structure. The PON network system includes a central office device and one or more user-side devices.

In a multi-level PON network system, a network between the central office device and a first-level user-side device and a network between the first-level user-side device and a second-level user-side device are managed by different management devices. Therefore, it is inconvenient to manage and maintain the multi-level PON network system. Currently, how to seek a solution that can centrally manage a multi-level PON network system is a problem to be urgently resolved.

### SUMMARY

The object of the present invention is to provide multi-level PON network management methods, a primary user-side device, and an optical line terminal, OLT, to centrally manage a plurality of levels of user-side devices by a central office device. . This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "... aspect according to an example", "the disclosure describes", or "the disclosure" describe technical teaching which relates to the understanding of the invention or its embodiments, which, however, is not claimed as such.

According to a first aspect according to the invention, this this invention provides a multi-level passive optical network PON management method. The method relates to a central office device (for example, an optical line terminal OLT) and user-side devices (for example, a primary optical network terminal ONT and a secondary optical network terminal ONT). When the OLT needs to configure a secondary user-side device connected to a primary user-side device, the primary user-side device receives a first OMCI message from the optical line terminal OLT. The first OMCI message includes first identification information and configuration information, the first identification information indicates the to-be-configured secondary user-side device, and the configuration information is information for configuring the secondary user-side device. Then the primary user-side device determines a configuration mode of the secondary user-side device based on the first identification information. Then the primary user-side device processes the configuration information based on the configuration mode, and configures the secondary user-side device corresponding to the first identification information.

In this embodiment, because the first OMCI message sent by the central office device to the primary user-side device includes the configuration information to be configured for the secondary user-side device and the first identification information indicating the secondary user-side device, the primary user-side device can determine, based on the first identification information, the secondary user-side device to be configured by using the configuration information. In addition, the primary user-side device further determines the configuration mode of the secondary user-side device based on the first identification information, processes the configuration information in the configuration mode, and sends processed configuration information to the secondary user-side device. Because the primary user-side device can process the first OMCI message carrying the configuration information of the secondary user-side device, when the central office device needs to configure the secondary user-side device, the central office device may send the OMCI message carrying the configuration information of the secondary user-side device to the primary user-side device for processing. In addition, because the central office device can configure the primary user-side device, and in the solutions of this application, the central office device can configure the secondary user-side device by using the primary user-side device, centralized management of a plurality of levels of user-side devices can be implemented.

In an optional implementation, the first identification information indicates an instance associated with the secondary user-side device, and the first identification information is encapsulated in a message identifier field of the first OMCI message. In other words, the first identification information that can indicate the to-be-configured secondary user-side device is an instance identifier. The primary user-side device may determine, based on the instance identifier, the configuration mode for processing the first OMCI message from the OLT. The determined configuration mode varies with a value of the first identification information.

If an entity to which the instance indicated by the first identification information belongs is located in the secondary user-side device, in other words, the first identification information indicates an instance of a specific entity in the secondary user-side device, the primary user-side device determines that the configuration mode is a first mode. In the first mode, the primary user-side device configures the secondary user-side device based on the first identification information and the configuration information carried in a message contents field of the first OMCI message, and the first identification information further indicates an instance that is of the secondary user-side device and that is to be configured by using the configuration information.

Optionally, in the first mode, the primary user-side device processes the configuration information by using one of an OMCI protocol, an Ethernet protocol, and an Internet protocol IP protocol.

If an entity to which the instance indicated by the first identification information belongs is located in the primary user-side device, in other words, the first identification information indicates an instance of an entity in the primary user-side device, but the instance is associated with the secondary user-side device, the primary user-side device determines that the configuration mode is a second mode. In the second mode, the primary user-side device configures the secondary user-side device based on the configuration information carried in a message contents field of the first OMCI message and second identification information indicating an instance that is of the secondary user-side device and that is to be configured by using the configuration information.

Optionally, in the second mode, the primary user-side device processes the configuration information according to an OMCI protocol.

In this implementation, the first OMCI message from the OLT carries the first identification information, and a mode to be used by the primary user-side device to process the first OMCI message may be determined by identifying a value of the first identification information. Therefore, the primary user-side device can process the configuration information in different configuration modes. In addition, the first identification information is indicated by an instance identifier. The primary user-side device may determine, based on the instance identifier, whether the first OMCI message is specifically for configuring an instance in the primary user-side device or an instance in the secondary user-side device. In addition, in the first mode, the first identification information for determining the configuration mode is also an identifier of the instance that is of the secondary user-side device and that is to be configured by using the configuration information. Therefore, the primary user-side device can configure the secondary user-side device based on only the first identification information and the configuration information. However, in the second mode, the first identification information for determining the configuration mode and an identifier (namely, the second identification information) indicating the instance that is of the secondary user-side device and that is to be configured by using the configuration information are not a same identifier. Therefore, the primary user-side device needs to configure the secondary user-side device based on the second identification information and the configuration information. In this implementation, the first identification information is used to distinguish between two processing modes, so that the primary user-side device can configure the secondary user-side device based on different first identification information and different configuration modes. In addition, because the first identification information is encapsulated in the message identifier field of the first OMCI message instead of the message contents field of the first OMCI message, when sequentially parsing fields of the first OMCI message, the primary user-side device may first obtain the first identification information in the message identifier field, and then determine, based on the first identification information, a mode for processing content in the message contents field. Therefore, efficiency of processing the first OMCI message by the primary user-side device is improved.

In another optional implementation, the primary user-side device may process the first OMCI message in the following manner:

The primary user-side device parses the message contents field of the first OMCI message according to the OMCI protocol, to obtain the content in the message contents field. The content in the message contents field includes the configuration information or an OMCI message field carrying the configuration information. Then the primary user-side device encapsulates the content in the message contents field as a first message according to a protocol indicated by the configuration mode. Then the primary user-side device sends the first message to the secondary user-side device according to the protocol indicated by the configuration mode.

In this implementation, the configuration information is encapsulated in the message contents field of the first OMCI message, and the primary user-side device needs to encapsulate, based on the configuration mode, the content in the message contents field in a message (namely, the first message) that can be identified by the secondary user-side device. In the conventional technology, all OMCI messages received by a primary user-side device are OMCI messages for configuring the primary user-side device, and the primary user-side device only needs to obtain, by parsing a message contents field of the OMCI message, configuration information for configuring the primary user-side device. Because no data exchange with a secondary ONT is required in a method of the conventional technology, the received OMCI message does not need to be processed based on different modes.

In another optional implementation, the entity to which the instance indicated by the first identification information belongs is located in the secondary user-side device, the first message includes the first identification information and the configuration information, and the configuration information is for configuring the instance indicated by the first identification information.

In this implementation, the instance that is of the secondary user-side device and that is to be configured by using the configuration information is used as an instance indicating the secondary user-side device, and the primary user-side device determines, based on the instance that is of the secondary user-side device and that is to be configured by using the configuration information, the configuration mode in which the primary user-side device processes the first OMCI message.

In another optional implementation, the entity to which the instance indicated by the first identification information belongs is located in the primary user-side device, the first message includes the second identification information and the configuration information, and the configuration information is for configuring the instance indicated by the second identification information.

In this implementation, the instance (namely, the second identification information) that is of the secondary user-side device and that is to be configured by using the configuration information is different from the instance (namely, the first identification information) indicating the secondary user-side device. An instance (namely, the first identification information) of an entity of a proxy module of the primary user-side device indicates the secondary user-side device. In addition, the first identification information and the second identification information are separately encapsulated. The first identification information is encapsulated in the message identifier field of the first OMCI message, and the second identification information and the configuration information are encapsulated in the message contents field of the first OMCI message. Therefore, when processing the first OMCI message and obtaining the first identification information by parsing the message identifier field, the primary user-side device can learn that a proxy mode is used, in other words, does not further parse the content in the message contents field of the first OMCI message, but adds a field to the content in the message contents field and subsequently forwards the content to the secondary user-side device.

In another optional implementation, the configuration mode for processing the configuration information is the first mode, and the content in the message contents field is the configuration information. That the primary user-side device encapsulates the content in the message contents field as a first message according to a protocol indicated by the configuration mode includes: When determining that no OMCI channel is established between the primary user-side device and the secondary user-side device, the primary user-side device encapsulates the configuration information and the first identification information in the first message according to an Ethernet protocol or an IP protocol. The first message is an IP message or an Ethernet message. That the primary user-side device sends the first message to the secondary user-side device according to the protocol indicated by the configuration mode includes: The primary user-side device sends the first message to the secondary user-side device according to the Ethernet protocol or the IP protocol, so that the secondary user-side device performs configuration according to the configuration information carried in the first message.

In this implementation, in the first mode, if no OMCI channel is established between the primary user-side device and the secondary user-side device, data exchange cannot be performed between the primary user-side device and the secondary user-side device via an OMCI message. Therefore, the primary user-side device reencapsulates, in the first message, the configuration information in the first OMCI message and the instance identifier (namely, the first identification information) corresponding to the configuration information, and sends the first message to the secondary user-side device. The first message is a message, for example, an Ethernet message or an IP message, that can be identified by the secondary user-side device. In this implementation, the primary user-side device encapsulates the configuration information in a message that can be identified by the secondary user-side device, so that the secondary user-side device can identify the configuration information from the primary user-side device, and further, the secondary user-side device performs configuration according to the configuration information.

In another optional implementation, the configuration mode for processing the configuration information is the first mode, the content in the message contents field is the configuration information, and the first message is a second OMCI message. That the primary user-side device encapsulates the content in the message contents field as a first message according to a protocol indicated by the configuration mode includes: When determining that an OMCI channel is established between the primary user-side device and the secondary user-side device, the primary user-side device encapsulates the configuration information and the first identification information in the second OMCI message according to the OMCI protocol. The configuration information is encapsulated in a message contents field of the second OMCI message, and the first identification information is encapsulated in a message identifier field of the second OMCI message. That the primary user-side device sends the first message to the secondary user-side device according to the protocol indicated by the configuration mode includes: The primary user-side device sends the second OMCI message to the secondary user-side device according to the OMCI protocol, so that the secondary user-side device performs configuration according to the configuration information carried in the second OMCI message.

In this implementation, in the first mode, the OMCI channel is established between the primary user-side device and the secondary user-side device, and data exchange can be performed between the primary user-side device and the secondary user-side device via an OMCI message. Therefore, the primary user-side device reencapsulates, in the second OMCI message, the configuration information in the first OMCI message and the instance identifier (namely, the first identification information) corresponding to the configuration information, and sends the configuration information to the secondary user-side device by using the second OMCI message.

In another optional but not claimed implementation, the configuration mode for processing the configuration information is the second mode, the protocol indicated by the configuration mode is the OMCI protocol, the content in the message contents field is at least two OMCI message fields, the at least two OMCI message fields are encapsulated by the OLT in the message contents field of the first OMCI message, and the at least two OMCI message fields carry the configuration information and the second identification information. That the primary user-side device encapsulates the content in the message contents field as a first message according to a protocol indicated by the configuration mode includes: The primary user-side device encapsulates a third OMCI message based on the at least two OMCI message fields according to the OMCI protocol. A GEM header information field of the third OMCI message carries third identification information indicating an OMCI channel between the primary user-side device and the secondary user-side device. That the primary user-side device sends the first message to the secondary user-side device according to the protocol indicated by the configuration mode includes: The primary user-side device sends the third OMCI message to the secondary user-side device according to the OMCI protocol, so that the secondary user-side device performs configuration according to the configuration information carried in the third OMCI message.

In this implementation, in the second mode, the OMCI channel is established between the primary user-side device and the secondary user-side device, and data exchange can be performed between the primary user-side device and the secondary user-side device via an OMCI message. In addition, some fields of the third OMCI message to be sent by the primary user-side device to the secondary user-side device are encapsulated by the OLT device. Therefore, the primary user-side device only needs to encapsulate the foregoing at least two fields as a complete OMCI message. Therefore, complexity of processing the OMCI message by the primary user-side device can be reduced, and processing load of encapsulating the OMCI message by the primary user-side device can be reduced.

In another optional but not claimed implementation, the at least two OMCI message fields include a message identifier field and a message contents field, the second identification information is located in the message identifier field in the at least two OMCI message fields, and the configuration information is located in the message contents field in the at least two OMCI message fields.

In another optional but not claimed implementation, the first identification information is an instance identifier of a proxy (proxy) instance that is in the primary user-side device and that is associated with the secondary user-side device.

In another optional but not claimed implementation, the method further includes: The primary user-side device establishes the OMCI channel between the primary user-side device and the secondary user-side device.

In this implementation, if the primary user-side device and the secondary user-side device need to communicate with each other via an OMCI message, an OMCI channel for transmission of an OMCI message needs to be established between the primary user-side device and the secondary user-side device. Specifically, when a secondary user-side device is connected to the primary user-side device, the primary user-side device sends a broadcast message to the secondary user-side device, so that the secondary user-side device sends information used for authentication to the primary user-side device. Then the primary user-side device performs authentication on the secondary user-side device. If the authentication succeeds, the primary user-side device allocates an ONT ID (or an ONU ID) to the secondary user-side device. In addition, the secondary user-side device immediately creates an OMCI GEM port. The OMCI GEM port is a port of a logical channel for carrying an OMCI message between the secondary user-side device and the primary user-side device. An identifier (namely, an OMCI GEM port ID) of the OMCI GEM port is equal to a value of the ONT ID (or the ONU ID). Afterward, an OMCI message sent by the primary user-side device to the secondary user-side device needs to carry the OMCI GEM port ID. The process of establishing the OMCI channel between the primary user-side device and the secondary user-side device may also be understood as a process of establishing the OMCI GEM port by the secondary user-side device and providing the OMCI GEM port ID for the primary user-side device.

In another optional implementation, the secondary user-side device is connected to the primary user-side device via a PON-specific interface, the PON-specific interface is used to run the OMCI channel, the PON-specific interface includes a PON UNI interface of the primary user-side device and an ANI interface of the secondary user-side device, and the downstream PON UNI interface of the primary user-side device is associated with the ANI interface of the secondary user-side device.

In another optional but not claimed implementation, before the primary user-side device receives the first OMCI message from the OLT, the method further includes: The primary user-side device sends, to the OLT, an association relationship between the first identification information and an instance identifier of a downstream PON port of the primary user-side device.

In this implementation, because one OLT is usually connected to a plurality of user-side devices, the OLT needs to distinguish between identification information from different user-side devices. Therefore, in this implementation, when the primary user-side device provides the first identification information for the OLT, the primary user-side device provides the first identification information for the OLT in a form of an association relationship, so that the OLT can learn of a specific primary user-side device from which the first identification information is.

In another optional but not claimed implementation, the configuration information includes any one of the following: access node interface ANI management configuration information, user network interface UNI management configuration information, connection management configuration information, and user management configuration information.

In another optional but not claimed implementation, before the primary user-side device receives the first OMCI message from the central office device, the method further includes: The primary user-side device obtains information about the secondary user-side device. The information about the secondary user-side device includes connection information between the primary user-side device and the secondary user-side device and information about an instance that is of the secondary user-side device and that needs to be configured. The primary user-side device sends a third OMCI message to the central office device. The third OMCI message carries the information about the secondary user-side device, and the information about the secondary user-side device is used to enable the central office device to encapsulate the first OMCI message based on the information about the secondary user-side device.

In this implementation, the primary user-side device needs to provide the information about the secondary user-side device for the OLT, so that the OLT can encapsulate the first OMCI message based on the information about the secondary user-side device.

In another optional but not claimed implementation, the third OMCI message further includes mode information, and the mode information indicates the mode in which the primary user-side device processes the first OMCI message.

In this implementation, when the primary user-side device provides the information about the secondary user-side device for the OLT, a character or a variable may be carried to indicate a configuration mode in which the primary user-side device can process the configuration information, so that the OLT encapsulates the first OMCI message based on the mode indicated by the mode information.

According to a second aspect according to the invention, the invention also provides another multi-level passive optical network PON management method, including: In this methof, an optical line terminal OLT receives first identification information sent by a primary user-side device. The first identification information indicates a to-be-configured secondary user-side device. The OLT determines, based on the first identification information, a configuration mode in which the primary user-side device configures the secondary user-side device. The OLT encapsulates a first ONT/ONU management and control interface OMCI message based on the configuration mode. The first OMCI message includes the first identification information and configuration information, and the configuration information is information for configuring the secondary user-side device. The OLT sends the first OMCI message to the primary user-side device, so that the primary user-side device configures the secondary user-side device based on the first identification information and the configuration information that are carried in the first OMCI message.

In this embodiment, the central office device may determine the configuration mode based on the first identification information sent by the primary user-side device, and encapsulate the first OMCI message for the primary user-side device based on the configuration mode, so that the primary user-side device can determine, based on the first identification information, the secondary user-side device to be configured by using the configuration information and the configuration mode, and configure the secondary user-side device by using the configuration mode. In the solutions of this application, the central office device can configure the secondary user-side device by using the primary user-side device. In addition, because the central office device can configure the primary user-side device, centralized management of a plurality of levels of user-side devices can be implemented.

In an optional implementation, the first identification information indicates an instance associated with the secondary user-side device. That the OLT determines an encapsulation method for a first ONT/ONU management and control interface OMCI message based on the first identification information includes: When an entity to which the instance indicated by the first identification information belongs is located in the secondary user-side device, the OLT determines that the configuration mode is a first mode, where in the first mode, the OLT encapsulates the configuration information in a message contents field of the first OMCI message, and the first identification information further indicates an instance that is of the secondary user-side device and that is to be configured by using the configuration information; or when an entity to which the instance indicated by the first identification information belongs is located in the primary user-side device, the OLT determines that the configuration mode is a second mode, where in the second mode, the OLT encapsulates, in a message contents field of the first OMCI message, both a field in which the configuration information is encapsulated and a field in which second identification information is encapsulated, and the second identification information indicates an instance that is of the secondary user-side device and that is to be configured by using the configuration information.

In an optional implementation, the configuration mode for processing the configuration information is the first mode. Before the OLT encapsulates the first OMCI message based on the configuration mode, the method further includes: The OLT determines the configuration information based on the first identification information. That the OLT encapsulates a first OMCI message based on the configuration mode includes: The OLT encapsulates the first identification information in a message identifier field of the first OMCI message, and encapsulates the configuration information in the message contents field of the first OMCI message.

In an optional but not claimed implementation, the configuration mode for processing the configuration information is the second mode. Before the OLT encapsulates the first OMCI message based on the configuration mode, the method further includes: The OLT receives the second identification information sent by the primary user-side device. The OLT determines the configuration information based on the second identification information. The configuration information is for configuring the instance indicated by the second identification information. That the OLT encapsulates a first OMCI message based on the configuration mode includes: The OLT encapsulates the first identification information in a message identifier field of the first OMCI message, and encapsulates, in the message contents field of the first OMCI message, at least two OMCI message fields in which the configuration information and the second identification information are encapsulated.

In an optional but not claimed implementation, the at least two OMCI message fields include a message identifier field and a message contents field, the second identification information is located in the message identifier field in the at least two OMCI message fields, and the configuration information is located in the message contents field in the at least two OMCI message fields.

In an optional but not claimed implementation, the method further includes: The OLT receives an association relationship that is between the first identification information and an instance identifier of a downstream PON port of the primary user-side device and that is sent by the primary user-side device. The OLT determines a connection relationship between the primary user-side device and the secondary user-side device based on the association relationship, and configures the secondary user-side device by sending the first OMCI message carrying the configuration information to the primary user-side device.

In an optional but not claimed implementation, the configuration information includes any one of the following: access node interface ANI management configuration information, user network interface UNI management configuration information, connection management configuration information, and user management configuration information.

It is to be noted that there are a plurality of other specific implementations in this embodiment of this application. For details, refer to the specific implementations of the first aspect and the advantageous effects of the first aspect. Details are not described herein again.

According to a third aspect, wherein the third aspect and any of its designs, implementations and options are not claimed, this disclosure provides a multi-level passive optical network PON management method, including: A secondary user-side device receives a third OMCI message sent by a primary user-side device. The secondary user-side device parses the third OMCI message according to an OMCI protocol, to obtain configuration information for configuring the secondary user-side device. The secondary user-side device performs configuration according to the configuration information.

In an optional implementation, that the secondary user-side device parses the third OMCI message according to an OMCI protocol includes:
The secondary user-side device parses a message identifier field of the third OMCI message to obtain second identification information. The second identification information indicates an instance that is of the secondary user-side device and that is to be configured by using the configuration information.

The secondary user-side device parses a message contents field of the third OMCI message to obtain the configuration information.

It is to be noted that there are a plurality of other specific implementations in this embodiment of this application. For details, refer to the specific implementations of the first aspect and the advantageous effects of the first aspect. Details are not described herein again.

According to a fourth aspect according to the invention, the invention also provides the primary user-side device in the foregoing implementations. The primary user-side device may be, although not claimed, an optical network terminal ONT or an optical network unit ONU. The device may include a processing module and, although not claimed, a transceiver module. The processing module is a processor, and the not claimed transceiver module may be a transceiver. The primary user-side device may further include a storage module, and the storage module is a memory. The storage module is configured to store instructions, and the processing module executes the instructions stored in the storage module, so that the primary user-side device performs the method in any one of the first aspect and the implementations of the first aspect. The processing module is a processor, and the not claimd transceiver module may be an input/output interface, a pin, a circuit, or the like. The processing module executes the instructions stored in the storage module, so that the primary user-side device performs the method in any one of the first aspect and the implementations of the first aspect. The storage module is a storage module (for example, although not claimed, a register or a cache), or may be, although not claimed, a storage module (for example, although not claimed, a read-only memory or a random access memory) that is in the primary user-side device.

According to a fifth aspect according to the invention, the invention also provides the OLT. The OLT includes a processing module with a processor, and, although not claimed, a transceiver. The OLT may further include, although not claimed, a storage module, and the storage module may be, although not claimed, a memory. The storage module is configured to store instructions, and the processing module executes the instructions stored in the storage module, so that the OLT performs the method in any one of the second aspect and the implementations of the second aspect. The processing module may be, although not claimed, a processor, and the not claimed transceiver module may be an input/output interface, a pin, a circuit, or the like. The processing module executes the instructions stored in the storage module, so that the OLT performs any one of the second aspect and the implementations of the second aspect. The storage module may be, although not claimed, a storage module (for example, a register or a cache) in the chip, or may be, although not claimed, a storage module (for example, a read-only memory or a random access memory) that is in the OLT and that is located outside the chip.

According to a sixth aspect, where the sixth aspect and any of its implementations, designs, and options below are not claimed, a not claimed embodiment of this application provides a communication apparatus. The communication apparatus may be the secondary user-side device in the foregoing implementations, or may be a chip in the secondary user-side device. The secondary user-side device may be an optical network terminal ONT or an optical network unit ONU. The communication apparatus may include a processing module and a transceiver module. When the communication apparatus is an authentication server, the processing module may be a processor, and the transceiver module may be a transceiver. The secondary user-side device may further include a storage module, and the storage module may be a memory. The storage module is configured to store instructions, and the processing module executes the instructions stored in the storage module, so that the secondary user-side device performs the method in any one of the third aspect and the implementations of the third aspect. When the communication apparatus is a chip in the secondary user-side device, the processing module may be a processor, and the transceiver module may be an input/output interface, a pin, a circuit, or the like. The processing module executes the instructions stored in the storage module, so that the secondary user-side device performs the method in any one of the third aspect and the implementations of the third aspect. The storage module may be a storage module (for example, a register or a cache) in the chip, or may be a storage module (for example, a read-only memory or a random access memory) that is in the secondary user-side device and that is located outside the chip.

According to a seventh aspect, a not claimed embodiment of this application provides a computer program product including instructions. When the computer program product runs on a computer, the computer is enabled to perform the method described in any one of the first aspect to the third aspect and the implementations of the foregoing aspects.

According to an eighth aspect, a not claimed embodiment of this application also provides a computer-readable storage medium. The computer-readable storage medium stores a computer program, and when the computer program runs on a computer, the computer is enabled to perform the method described in any one of the first aspect to the third aspect and the implementations of the foregoing aspects.

According to a ninth aspect, a not claimed embodiment of this application provides a communication system. The communication system includes the communication apparatus in any one of the fourth aspect and the implementations of the fourth aspect, the communication apparatus according to any one of the fifth aspect and the implementations of the fifth aspect, and the communication device according to any one of the sixth aspect and the implementations of the sixth aspect.

It can be learned from the foregoing technical solutions that embodiments of this application have the following advantages:

In embodiments of this application, because the first OMCI message sent by the central office device to the primary user-side device includes the configuration information to be configured for the secondary user-side device and the first identification information indicating the secondary user-side device, the primary user-side device can determine, based on the first identification information, the secondary user-side device to be configured by using the configuration information. In addition, the primary user-side device further determines the configuration mode of the secondary user-side device based on the first identification information, processes the configuration information in the configuration mode, and sends processed configuration information to the secondary user-side device. Because the primary user-side device can process the first OMCI message carrying the configuration information of the secondary user-side device, when the central office device needs to configure the secondary user-side device, the central office device may send the OMCI message carrying the configuration information of the secondary user-side device to the primary user-side device for processing. In addition, because the central office device can configure the primary user-side device, and in the solutions of this application, the central office device can configure the secondary user-side device by using the primary user-side device, centralized management of a plurality of levels of user-side devices can be implemented.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

To describe the technical solutions in embodiments of this application more clearly, the following briefly describes the accompanying drawings for describing the embodiments. It is clear that the accompanying drawings in the following description show merely some embodiments of this application.
FIG. 1A is a diagram of an architecture of a level-1 passive optical network;
FIG. 1B is an example diagram of an architecture of a level-2 passive optical network;
FIG. 2 is a flowchart of a multi-level PON network management method according to an embodiment of this application;
FIG. 3 is another flowchart of a multi-level PON network management method according to an embodiment of this application;
FIG. 4 is another flowchart of a multi-level PON network management method according to an embodiment of this application;
FIG. 5 is a schematic diagram of an embodiment of a communication apparatus according to embodiments of this application; and
FIG. 6 is a schematic diagram of another embodiment of a communication apparatus according to embodiments of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application.

In the specification, claims, and accompanying drawings of this application, the terms "first", "second", "third", "fourth", and the like (if existent) are intended to distinguish between similar objects but do not necessarily indicate a specific order. It should be understood that the data termed in such a way is interchangeable in proper circumstances so that the embodiments described herein can be implemented in other orders than the order illustrated or described herein. In addition, the terms "include" and "have" and any other variants thereof are intended to cover the non-exclusive inclusion. For example, a process, a method, a system, a product, or a device that includes a list of steps or units is not necessarily limited to those expressly listed steps or units, but may include other steps or units not expressly listed or inherent to such a process, method, product, or device.

Embodiments of this application provide a multi-level PON network management method and a related apparatus, to implement centralized management performed by a central office device on a plurality of levels of user-side devices.

For ease of understanding of the multi-level PON network management method provided in embodiments of this application, the following first describes a basic architecture of a PON network.

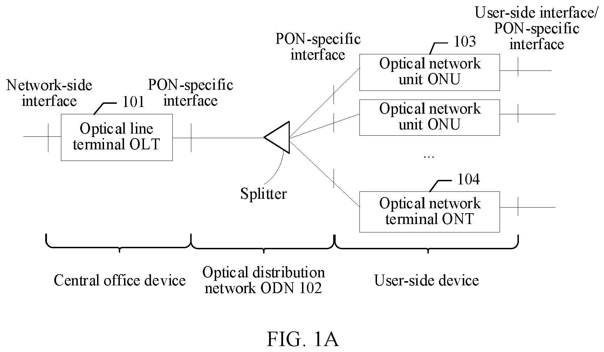

FIG. 1A is a diagram of a basic architecture of a PON network system. The PON network system includes a central office device and a user-side device. The central office device may be an optical line terminal (optical line terminal, OLT) 101, and the user-side device may be an optical network unit (optical network unit, ONU) 103 or an optical network terminal (optical network terminal, ONT) 104. The central office device and the user-side device are usually connected via an optical distribution network (optical distribution network, ODN) 102. The optical distribution network ODN 102 is a passive network. To be specific, the optical distribution network ODN 102 does not include an active electronic component or electronic power supply, but includes passive optical components such as a fiber, an optical distribution frame (optical distribution frame, ODF), and a splitter (splitter). Specifically, the optical line terminal OLT 101 is connected to an operator network by using a network-side interface, and the optical line terminal OLT 101 is connected to the optical distribution network ODN 102 via a PON-specific interface. In addition, the optical distribution network ODN 102 is connected to the optical network unit ONU 103 or the optical network terminal ONT 104 via a PON-specific interface.

It should be understood that when the user-side device is the optical network terminal ONT 104, the optical network terminal ONT 104 is directly connected to a terminal device at a home of a user. For example, the optical network terminal ONT 104 may be a router connected to the home via a fiber, and the terminal device may be a mobile phone or a tablet computer connected to the router through wireless fidelity (wireless fidelity, Wi-Fi), or may be an Internet of things device (for example, an indoor temperature control device, an indoor monitoring device, or another artificial intelligence device). When the user-side device is the optical network unit ONU 103, another network, for example, Ethernet, further exists between the optical network unit ONU 103 and a terminal device at a home of a user. For example, the optical network unit ONU 103 is an optical modem or the like provided by an operator, and the optical modem is further connected to an optical network terminal ONT, for example, an indoor router.

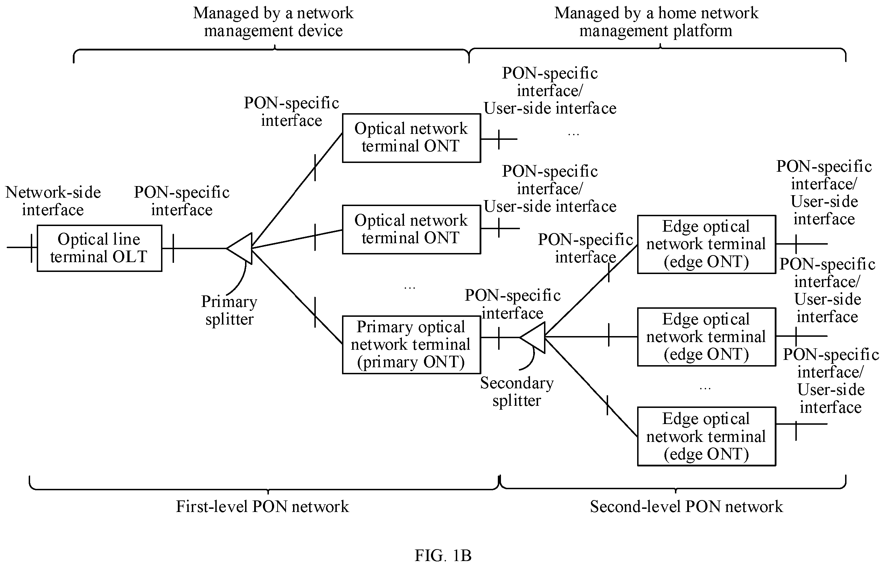

It should be understood that FIG. 1A shows a level-1 PON network system, and the multi-level PON network management method provided in embodiments of this application is mainly applied to a multi-level PON network system. The following uses a level-2 PON network system as an example for description. FIG. 1B is an example diagram of the level-2 PON network system. An optical line terminal OLT is connected to a plurality of optical network terminals ONTs via a primary splitter. If a gateway optical network terminal ONT exists in the plurality of optical network terminals ONTs, the optical network terminal ONT can be connected to a plurality of optical network terminals ONTs via a secondary splitter. In this case, the gateway ONT serves as a primary ONT, and the optical network terminal connected to the primary ONT via the secondary splitter serves as a secondary ONT (also referred to as an edge ONT). Generally, a network segment from the optical line terminal OLT to the primary ONT is referred to as a first-level PON network, and a network segment from the secondary splitter to the secondary ONT is referred to as a second-level PON network.

In the conventional technology, a multi-level PON network system is hierarchically managed. For example, in the level-2 PON network system shown in FIG. 1B, the network segment (namely, the first-level PON network) from the optical line terminal OLT to the primary ONT is managed by a network management device. To be specific, the network management device controls the optical line terminal OLT to send configuration information to the primary ONT to configure the primary ONT. The edge ONT (namely, the second-level PON network) connected to the primary ONT is managed by a home network management platform. To be specific, the home network management platform sends configuration information to the edge ONT to configure the edge ONT. Such a hierarchical management manner affects configuration efficiency of each ONT in the multi-level PON network system.

However, in the multi-level PON network management method provided in embodiments of this application, a multi-level PON network is centrally managed by using an ONT/ONU management and control interface (ONT/ONU management and control interface, OMCI) protocol, so that the foregoing disadvantage caused by hierarchical management can be overcome.

It should be understood that the optical network terminal ONT in FIG. 1B may also be replaced with an optical network unit ONU. In actual application, some optical modems also have functions of a router. In other words, some user-side devices serve as both an optical network unit ONU and an optical network terminal ONT. For ease of description, in subsequent embodiments, the multi-level PON network management method is described by using a user-side device as an example.

It should be further understood that the multi-level PON network management method provided in embodiments of this application is applicable to the level-2 PON network system shown in FIG. 1B, also applicable to a level-3 PON network system, a level-4 PON network system, and the like. This is not specifically limited herein. For ease of description, the following describes the multi-level PON network management method based on only a scenario of the level-2 PON network.

It should be understood that the PON system in embodiments of this application may be a gigabit-capable passive optical network (gigabit-capable passive optical network, GPON) system, for example, a GPON system defined in ITU-TG.984 series standards, an XG-PON system defined in ITU-TG.987 series standards, or an XGS-PON system defined in ITU-TG.9807.1 standards. This is not specifically limited herein. In this embodiment and subsequent embodiments, only the GPON system is used as an example for description.

For ease of understanding of the multi-level PON network management method provided in embodiments of this application, the following first describes an OMCI protocol and a management model defined in the OMCI protocol.

The OMCI protocol is an interface specification defined in the GPON standard for managing a user-side device (namely, an ONT or an ONU) by a central office device (namely, an OLT). When the user-side device registers with the central office device, an OMCI channel can be established between the user-side device and the central office device, so that an OMCI message can be transmitted between the user-side device and the central office device through the OMCI channel. In addition, the OMCI protocol is a primary -secondary management protocol. A primary device delivers a command, and waits for a secondary device to execute the command and then respond. For example, when the OMCI protocol is used between the central office device and the user-side device, the central office device (namely, the OLT) is a primary device, the user-side device (for example, a primary ONT) is a secondary device, and the central office device controls, over the OMCI channel, a plurality of user-side devices connected to the central office device.

In the OMCI protocol, various resources and services of the user-side device that are managed by the central office device are abstracted into a protocol-independent management information base (protocol-independent management information base, MIB). A basic information unit of the management information base is a managed entity (managed entity, ME). The managed entity is an abstract representation of a resource and/or a service of the user-side device, and is a management object abstracted from various to-be-managed resources and/or services. For example, common managed entities include an ANI-G entity, configured to manage an access node interface (access node interface, ANI); a UNI-G entity, configured to manage a user network interface (user network interface, UNI) of a GPON encapsulation method (GPON encapsulation method, GEM) service; a transmission container (transmission container, T-CONT) entity, configured to manage a dynamic bandwidth assignment (dynamically bandwidth assignment, DBA); and an Ethernet port entity, configured to manage different Ethernet ports. When the managed entity is concretized into a user-side device or a service, the managed entity becomes an instance. For example, the Ethernet port may be an entity, and the Ethernet port entity is an abstraction of all ports that provide an Ethernet function on the ONT. A specific Ethernet port of an ONT is an instance of the Ethernet port entity. For example, an Ethernet port 1 of the ONT may be an instance. In the OMCI management model, the to-be-managed resources and/or services are abstracted into managed entities, and configuration is performed per instance. The central office device implements a configuration management function of each managed entity ME by configuring an instance for the user-side device.

When the OMCI protocol is used, data exchange is implemented between the central office device and the user-side device via an OMCI message. A format of the OMCI message is shown in the following Table 1.

**Table 1**

| | | | | | | |
|---|---|---|---|---|---|---|
| GEM header information (5 bytes) | Transaction correlation identifier (2 bytes) | Message type (1 byte) | Device identifier (1 byte) | Message identifier (4 bytes) | Message contents (32 bytes) | OMCI trailer (8 bytes) |

The GPON encapsulation method header (GPON encapsulation method header, GEM Header) information field, referred to as a GEM header information field, includes information for distinguishing between different OMCI GEM ports (referred to as GEM ports below). The GEM port is a logical port of the ONT and is used for carrying data from a downstream PON port of the OLT. GEM port identifiers of different ONTs are different. Therefore, different ONTs can be distinguished based on GEM port identifiers. Specifically, the GEM header information field is used to encapsulate a GEM port ID of an ONT that receives the OMCI message. The GEM port ID is an identifier of a GEM port. In addition, the GEM header information field may further include information such as a GEM payload length and a forward error correction (forward error correction, FEC) code. The GEM payload length indicates a length of a packet after the GEM header information field, and the forward error correction code is used to improve data transmission reliability by adding redundant information. In addition, in actual application, the GEM header information field may further include other information. The information is not specifically enumerated in this embodiment.

The transaction correlation identifier (transaction correlation identifier, TCI) field is used to identify a request message and a response message in a same group, for example, used to match a request message (or a command) from the OLT to the ONT and a response message from the ONT to the OLT. Generally, values of transaction correlation identifier fields in a request message and a response message in one group that correspond to each other are consistent. For example, the OLT sends an OMCI message 1 to the ONT, and then the ONT returns, to the OLT, an OMCI message 2 that is based on the OMCI message 1. In this case, a value of a transaction correlation identifier field in the OMCI message 1 should be consistent with a value of a transaction correlation identifier field in the OMCI message 2. Therefore, the OLT may determine that the OMCI message 2 is a response message corresponding to the OMCI message 1. Optionally, a most significant bit of the transaction correlation identifier field indicates a priority of the OMCI message. For example, that the most significant bit is 0 indicates a low priority, and that the most significant bit is 1 indicates a high priority. Generally, the OLT determines whether a priority of executing a command is high or low.

The message type (message type, MT) field indicates a purpose or an action of the message. For example, if the message type is "create (create)", it indicates creating an instance of a managed entity and an attribute of the managed entity, if the message type is "delete (delete)", it indicates deleting an instance of a managed entity, if the message type is "set (set)", it indicates setting one or more attributes of a managed entity, or if the message type is "get (get)", it indicates obtaining one or more attributes of a managed entity. In addition, the message type further includes information, for example, whether confirmation is required, whether a response message is one corresponding to an action request, and whether MIB data synchronization is required.

For the device identifier (device identifier) field, this field has a fixed value 0x0A for a GPON device.

The message identifier (message identifier) field includes an identifier of a managed entity and an identifier of an instance corresponding to the managed entity. The message identifier usually includes 4 bytes. The first 2 bytes indicate a target managed entity of a specified action in the message type, and the last 2 bytes are used to identify an instance of the managed entity. Therefore, it may be understood that the message identifier field includes a 2-byte entity identifier and a 2-byte instance identifier.

The message contents (message contents) field is used to encapsulate a packet payload, and is related to a specific message.

The OMCI trailer (OMCI trailer) field is used to carry information required for cyclic redundancy check (cyclic redundancy check, CRC).

For example, if the OLT sends an OMCI message to one ONT (for example, an ONT 2) in a plurality of ONTs, the OMCI message is for configuring a port switch of an Ethernet port 2 of the ONT 2. In this case, GEM header information of the OMCI message should carry a GEM port ID of a corresponding GEM port of the ONT 2. A message type of the OMCI message is a value corresponding to "set" (set). An entity ID of the first 2 bytes carried in a message identifier field of the OMCI message is an ID of the Ethernet port. An instance ID of the last 2 bytes carried in the message identifier field of the OMCI message is 2 (representing the Ethernet port 2). The message contents field carries port switch information of the Ethernet port.

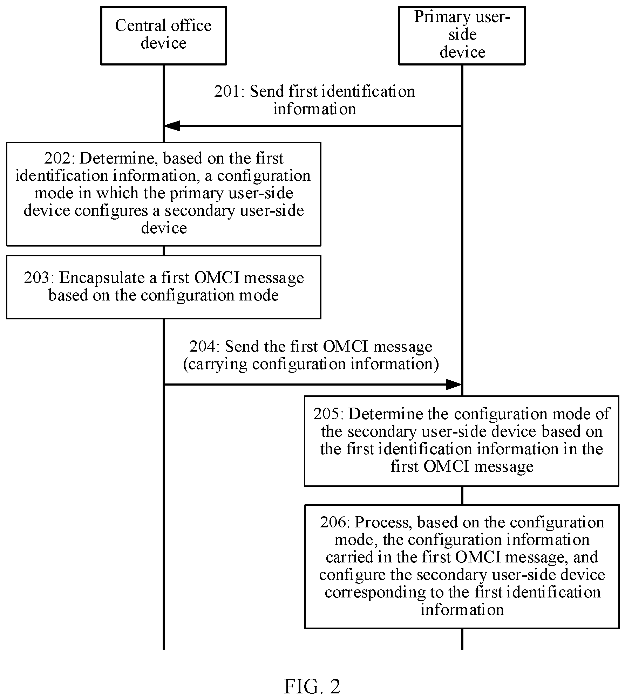

Based on the foregoing multi-level PON network system and application scenario, the following describes a main procedure of the multi-level PON network management method in the embodiments. As shown in FIG. 2, a central office device and a user-side device perform the following steps.

Step 201: A primary user-side device sends first identification information to the central office device.

In this embodiment, the central office device may be an optical line terminal OLT in the foregoing multi-level PON network architecture. The primary user-side device may be an optical network terminal ONT or an optical network unit ONU in the foregoing multi-level PON network architecture. A secondary user-side device described below may be an optical network terminal ONT or an optical network unit ONU in the foregoing multi-level PON network architecture. However, when the primary user-side device is an optical network terminal ONT, the secondary user-side device is also an optical network terminal ONT; and when the primary user-side device is an optical network unit ONU, the secondary user-side device is also an optical network unit ONU.

The first identification information indicates a to-be-configured secondary user-side device. It can be learned from the foregoing multi-level PON network system architecture that one primary user-side device is connected to a plurality of secondary user-side devices. When the central office device receives the first identification information, the central office device may learn of, based on the first identification information, the secondary user-side device that needs to be configured and that is connected to the primary user-side device.

In an optional implementation, that the first identification information indicates an instance associated with the secondary user-side device may also mean that the first identification information is an instance identifier of an instance associated with the secondary user-side device. Because the instance identifier can reflect an identifier of a secondary user-side device, or the instance identifier includes an identifier of a secondary user-side device, the central office device can determine, based on the first identification information, a specific secondary user-side device that needs to be configured and that is connected to the primary user-side device.

Further, although the instance indicated by the first identification information is associated with the secondary user-side device, an entity to which the instance indicated by the first identification information belongs may be located in the secondary user-side device, or may be located in the primary user-side device.

In an optional implementation, if the entity to which the instance indicated by the first identification information belongs is located in the secondary user-side device, in other words, the instance indicated by the first identification information is an instance that is of the secondary user-side device and that needs to be configured, when receiving the first identification information, the central office device may learn of which instance of which secondary user-side device connected to the primary user-side device needs to be configured.

In another optional implementation, if the entity to which the instance indicated by the first identification information belongs is located in the primary user-side device, the primary user-side device needs to send the first identification information to the central office device, and also needs to send second identification information to the central office device. An instance indicated by the second identification information is an instance that is of the secondary user-side device and that needs to be configured. Therefore, when the central office device receives the first identification information and the second identification information, the central office device may determine, based on the first identification information, the secondary user-side device that needs to be configured, and determine, based on the second identification information, the instance that is of the secondary user-side device and that needs to be configured.

It is to be noted that step 201 may be performed in an OMCI initialization procedure between the primary user-side device and the central office device, or after the primary user-side device and the central office device complete the OMCI initialization procedure, the primary user-side device separately reports the first identification information and/or the second identification information to the central office device. This is not specifically limited herein.

Step 202: The central office device determines, based on the first identification information, a configuration mode in which the primary user-side device configures the secondary user-side device.

In this embodiment, the first identification information further has a function of distinguishing between configuration modes. The configuration mode is a mode in which the primary user-side device configures the secondary user-side device. Because the central office device can encapsulate, in a first OMCI message, configuration information for configuring the secondary user-side device, the configuration mode may be understood as a mode in which the primary user-side device processes the OMCI message from the central office device, or may be understood as a mode in which the primary user-side device processes the configuration information. Generally, the central office device encapsulates the OMCI message based on a mode in which the primary user-side device can process the OMCI message.

In an optional implementation, both the central office device and the primary user-side device store a correspondence between first identification information and a configuration mode. When the first identification information is different instance identifiers, configuration modes corresponding to the first identification information are different. Therefore, that the primary user-side device sends the first identification information to the central office device may also mean that the primary user-side device indirectly indicates a configuration mode used by the primary user-side device, and therefore the central office device also uses the configuration mode corresponding to the first identification information.

In an optional implementation, different configuration modes may be distinguished by determining whether the entity to which the instance indicated by the first identification information belongs is located in the primary user-side device.

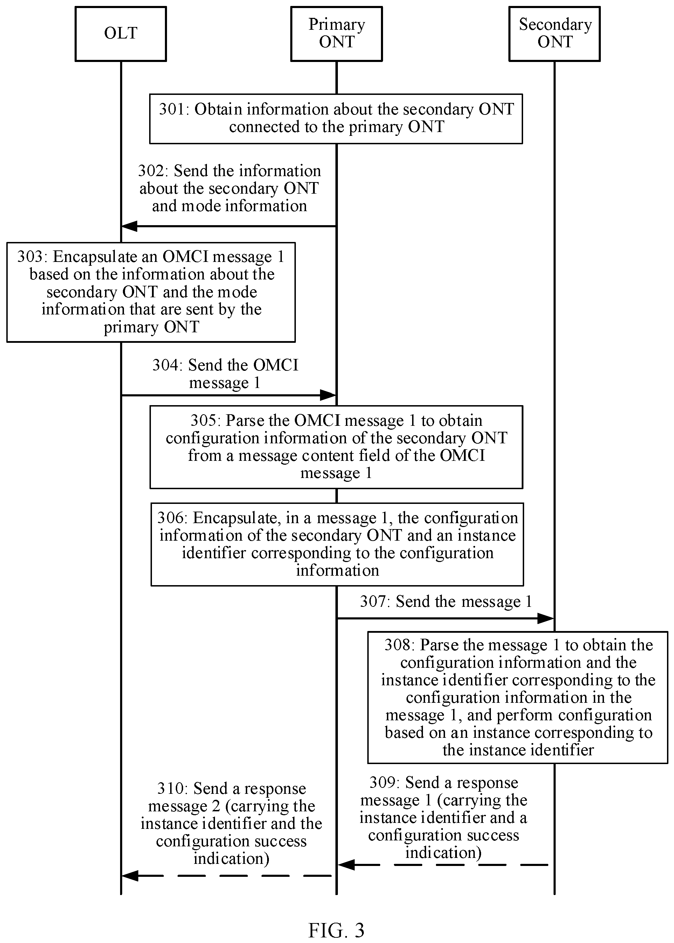

For example, when the entity to which the instance indicated by the first identification information belongs is located in the secondary user-side device, it is determined that the configuration mode is a first mode. In the first mode, the primary user-side device encapsulates a message that carries the configuration information and that is to be sent to the secondary user-side device. The primary user-side device configures the secondary user-side device based on the first identification information and the configuration information carried in a message contents field of the first OMCI message. The first identification information further indicates an instance that is of the secondary user-side device and that is to be configured by using the configuration information. The primary user-side device may encapsulate, by using any one of an OMCI protocol, an Ethernet protocol, and an Internet protocol IP protocol, the configuration information as a message that can be identified by the secondary user-side device. For details, refer to the following embodiment corresponding to FIG. 3.

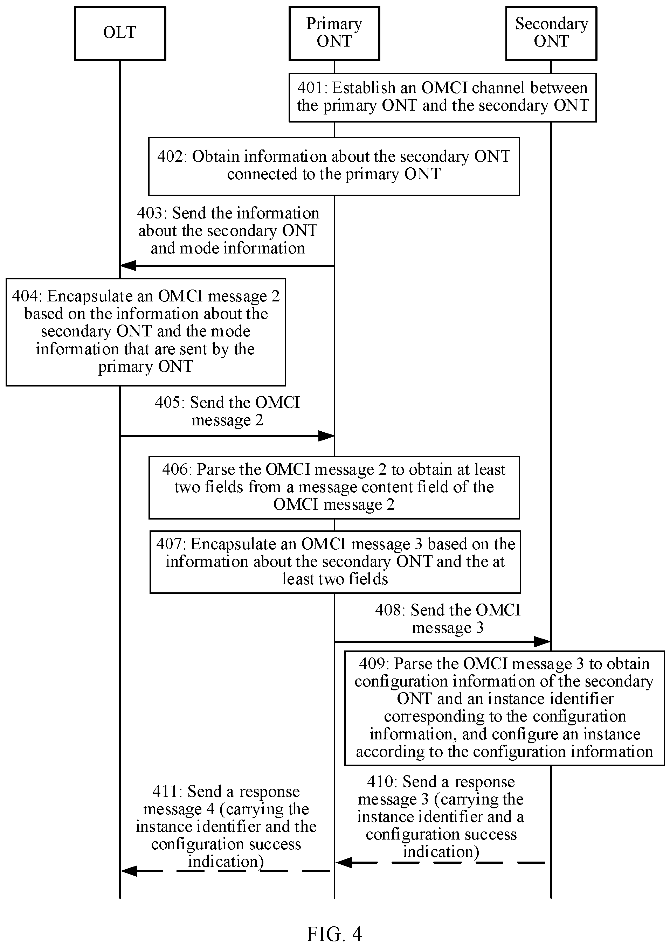

For example, when the entity to which the instance indicated by the first identification information belongs is located in the primary user-side device, it is determined that the configuration mode is a second mode. In the second mode, the central office device, the primary user-side device, and the secondary user-side device all communicate with each other via OMCI messages. Specifically, the central office device pre-encapsulates some or all fields of an OMCI message to be sent by the primary user-side device to the secondary user-side device. Some fields of the OMCI message carry the configuration information and the second identification information. Then the primary user-side device supplements the fields into a complete OMCI message, and sends the complete OMCI message to the secondary user-side device. In other words, the primary user-side device configures the secondary user-side device based on the configuration information carried in a message contents field of the first OMCI message and the second identification information. The second identification information indicates an instance that is of the secondary user-side device and that is to be configured by using the configuration information. For details, refer to the following embodiment corresponding to FIG. 4.

Step 203: The central office device encapsulates the first OMCI message based on the configuration mode.

The first OMCI message is a message to be sent by the central office device to the primary user-side device, and the first OMCI message is for configuring a secondary user-side device connected to the primary user-side device. The first OMCI message includes first identification information and the configuration information. A value of the first identification information in the first OMCI message is the same as a value of the first identification information sent by the primary user-side device to the central office device. Because the correspondence exists between first identification information and a configuration mode, it may be understood that a mode in which the central office device encapsulates the first OMCI message is a mode in which the primary user-side device can process the first OMCI message.

In this embodiment, the central office device may encapsulate the first OMCI message in the first mode, or may encapsulate the first OMCI message in the second mode.

In an optional implementation, when the central office device determines to use the first mode, the central office device encapsulates the first identification information in a message identifier field of the first OMCI message, and encapsulates the configuration information in the message contents field of the first OMCI message.

In another optional implementation, when the central office device determines to use the second mode, the central office device encapsulates the first identification information in a message identifier field of the first OMCI message, and encapsulates, in the message contents field of the first OMCI message, at least two OMCI message fields in which the configuration information and the second identification information are encapsulated. The at least two OMCI message fields include a message identifier field and a message contents field, the second identification information is located in the message identifier field in the at least two OMCI message fields, and the configuration information is located in the message contents field in the at least two OMCI message fields. Optionally, the at least two OMCI message fields may further include another field, for example, a message type field, a transaction correlation identifier field, a device identifier field, or an OMCI trailer field. For details, refer to related descriptions in the following embodiment corresponding to FIG. 4.

Step 204: The central office device sends the first OMCI message to the primary user-side device.

In this embodiment, after the central office device encapsulates the first OMCI message, the central office device sends the first OMCI message to the primary user-side device through an OMCI channel between the central office device and the primary user-side device. Therefore, the primary user-side device receives the first OMCI message from the central office device through the OMCI channel.

Then the primary user-side device parses the first OMCI message according to the OMCI protocol, to obtain the first identification information, and performs the following step 205.

Step 205: The primary user-side device determines the configuration mode of the secondary user-side device based on the first identification information in the first OMCI message.

In an optional implementation, when the entity to which the instance indicated by the first identification information belongs is located in the secondary user-side device, the primary user-side device determines that the configuration mode is the first mode. In the first mode, the primary user-side device configures the secondary user-side device based on the first identification information and the configuration information carried in the message contents field of the first OMCI message, and the first identification information further indicates the instance that is of the secondary user-side device and that is to be configured by using the configuration information. Optionally, in the first mode, the primary user-side device processes the configuration information by using one of the OMCI protocol, the Ethernet protocol, and the Internet protocol IP protocol.

In another optional implementation, when the entity to which the instance indicated by the first identification information belongs is located in the primary user-side device, the primary user-side device determines that the configuration mode is the second mode. In the second mode, the primary user-side device configures the secondary user-side device based on the configuration information carried in the message contents field of the first OMCI message and the second identification information indicating the instance that is of the secondary user-side device and that is to be configured by using the configuration information. Optionally, in the second mode, the primary user-side device processes the configuration information according to the OMCI protocol.

For details, refer to related descriptions in step 202.

In this implementation, the first OMCI message from the OLT carries the first identification information, and a mode to be used by the primary user-side device to process the first OMCI message may be determined by identifying the value of the first identification information. Therefore, the primary user-side device can process the configuration information in different configuration modes. In addition, the first identification information is indicated by an instance identifier. The primary user-side device may determine, based on the instance identifier, whether the first OMCI message is specifically for configuring an instance in the primary user-side device or an instance in the secondary user-side device. In this implementation, the first identification information is used to distinguish between two processing modes, so that the primary user-side device can configure the secondary user-side device based on different first identification information and different configuration modes. In addition, because the first identification information is encapsulated in the message identifier field of the first OMCI message instead of the message contents field of the first OMCI message, when sequentially parsing fields of the first OMCI message, the primary user-side device may first obtain the first identification information in the message identifier field, and then determine, based on the first identification information, a mode for processing content in the message contents field. Therefore, efficiency of processing the first OMCI message by the primary user-side device is improved.

Step 206: The primary user-side device processes, based on the configuration mode, the configuration information carried in the first OMCI message, and configures the secondary user-side device corresponding to the first identification information.

Specifically, the primary user-side device parses the message contents field of the first OMCI message according to the OMCI protocol, to obtain the content in the message contents field. The content in the message contents field includes the configuration information. Then the primary user-side device encapsulates the content in the message contents field as a first message according to a protocol indicated by the configuration mode. Then the primary user-side device sends the first message to the secondary user-side device according to the protocol indicated by the configuration mode.

The following separately describes specific processing manners of the primary user-side device in different configuration modes.

Manner 1: If the configuration mode is the first mode, the content in the message contents field is the configuration information, and the content in the message contents field does not include an instance identifier of an instance corresponding to the configuration information. In other words, the message contents field does not include the first identification information. In this case, the first identification information is encapsulated in the message identifier field of the first OMCI message. In this case, the primary user-side device may send the configuration information to the secondary user-side device according to the OMCI protocol, or the primary user-side device may send the configuration information to the secondary user-side device according to a non-OMCI protocol (for example, the Ethernet protocol or the IP protocol).

In an optional implementation, the primary user-side device uses a non-OMCI protocol. Specifically, when determining that no OMCI channel is established between the primary user-side device and the secondary user-side device, the primary user-side device encapsulates the configuration information and the first identification information in the first message according to the Ethernet protocol or the IP protocol. The first message is an IP message or an Ethernet message. Then the primary user-side device sends the first message to the secondary user-side device according to the Ethernet protocol or the IP protocol, so that the secondary user-side device performs configuration according to the configuration information carried in the first message. For details, refer to related descriptions in the following embodiment corresponding to FIG. 3.

In another optional implementation, the primary user-side device uses the OMCI protocol. Specifically, when determining that an OMCI channel is established between the primary user-side device and the secondary user-side device, the primary user-side device encapsulates the configuration information and the first identification information in a second OMCI message according to the OMCI protocol. The configuration information is encapsulated in a message contents field of the second OMCI message, and the first identification information is encapsulated in a message identifier field of the second OMCI message. Then the primary user-side device sends the second OMCI message to the secondary user-side device according to the OMCI protocol, so that the secondary user-side device performs configuration according to the configuration information carried in the second OMCI message. For details, refer to related descriptions in the following embodiment corresponding to FIG. 3.

Manner 2: If the configuration mode is the second mode, in other words, the configuration mode for processing the configuration information is the second mode, the protocol indicated by the configuration mode is the OMCI protocol, the content in the message contents field is the at least two OMCI message fields, the at least two OMCI message fields are encapsulated by the OLT in the message contents field of the first OMCI message, and the at least two OMCI message fields carry the configuration information and the second identification information. In other words, the content in the message contents field includes the configuration information and also includes an instance identifier (namely, the second identification information) of an instance corresponding to the configuration information. However, the configuration information and the second identification information are not directly encapsulated in the message contents field of the first OMCI message, but encapsulated in the message contents field of the first OMCI message in a form of an OMCI message field. For example, the at least two OMCI message fields include the message identifier field and the message contents field, the second identification information is located in the message identifier field in the at least two OMCI message fields, and the configuration information is located in the message contents field in the at least two OMCI message fields.

In an optional implementation, the primary user-side device encapsulates a third OMCI message based on the at least two OMCI message fields according to the OMCI protocol. Then the primary user-side device sends the third OMCI message to the secondary user-side device according to the OMCI protocol, so that the secondary user-side device performs configuration according to the configuration information carried in the third OMCI message. A GEM header information field of the third OMCI message carries third identification information indicating an OMCI channel between the primary user-side device and the secondary user-side device. For details, refer to related descriptions in the following embodiment corresponding to FIG. 4.

In this embodiment, because the first OMCI message sent by the central office device to the primary user-side device includes the configuration information to be configured for the secondary user-side device and the first identification information indicating the secondary user-side device, the primary user-side device can determine, based on the first identification information, the secondary user-side device to be configured by using the configuration information. In addition, the primary user-side device further determines the configuration mode of the secondary user-side device based on the first identification information, processes the configuration information in the configuration mode, and sends processed configuration information to the secondary user-side device. Because the primary user-side device can process the first OMCI message carrying the configuration information of the secondary user-side device, when the central office device needs to configure the secondary user-side device, the central office device may send the OMCI message carrying the configuration information of the secondary user-side device to the primary user-side device for processing. In addition, because the central office device can configure the primary user-side device, and in the solutions of this application, the central office device can configure the secondary user-side device by using the primary user-side device, centralized management of a plurality of levels of user-side devices can be implemented.

The following describes the foregoing two OMCI model-based configuration modes by using an example in which the central office device is an OLT, the primary user-side device is a primary ONT, and the secondary user-side device is a secondary ONT. The first mode is an all-OMCI mode. In the all-OMCI mode, no OMCI channel needs to be established between the primary ONT and the secondary ONT. The primary ONT extracts, from an OMCI message from the OLT, configuration information configured by the OLT for the secondary ONT, encapsulates the configuration information as a packet (or a message) that can be identified by the secondary ONT, and sends the message to the secondary ONT, to implement configuration of the secondary ONT. For details, refer to the embodiment corresponding to FIG. 3. The second mode is a proxy mode. In the proxy mode, an OMCI channel needs to be established between the primary ONT and the secondary ONT. Two or more fields of an OMCI message to be sent to the secondary ONT have been encapsulated in an OMCI message sent by the OLT to the primary ONT. The primary ONT only needs to assemble the two or more fields of the OMCI message to be sent to the secondary ONT into a complete OMCI message, and send the OMCI message to the secondary ONT through the OMCI channel between the primary ONT and the secondary ONT, to implement configuration of the secondary ONT. For details, refer to the embodiment corresponding to FIG. 4. The following separately describes specific procedures in the two configuration modes.

FIG. 3 shows a multi-level PON network management method when an all-OMCI mode is used. A downstream PON port of an OLT is connected to an upstream PON port of a primary ONT (namely, an ANI interface of the primary ONT), and a downstream PON port (namely, a PON UNI interface) of the primary ONT is connected to an upstream PON port of a secondary ONT (namely, an ANI interface of the secondary ONT) via a fiber. An OMCI model is used for data transmission between the OLT and the primary ONT, in other words, an OMCI message is used for data exchange between the OLT and the primary ONT. Steps performed by the OLT, the primary ONT, and the secondary ONT include the following steps.

Step 301: The primary ONT obtains information about the secondary ONT connected to the primary ONT.

In this embodiment, when the primary ONT is connected to the OLT for the first time, the primary ONT triggers an OMCI initialization procedure to establish an OMCI channel between the OLT and the primary ONT, so that the OLT and the primary ONT can communicate with each other via an OMCI message. Then, when a secondary ONT is connected to the primary ONT, the primary ONT obtains information about the secondary ONT.

The information about the secondary ONT includes connection information between the primary ONT and the secondary ONT and information about an instance that is of the secondary ONT and that needs to be configured.

In an optional implementation, the connection information between the primary ONT and the secondary ONT includes a port number of the downstream PON port of the primary ONT connected to the secondary ONT and a port number of the upstream PON port of the secondary ONT.

In this implementation, the port number of the downstream PON port of the primary ONT connected to the secondary ONT and the port number of the upstream PON port of the secondary ONT indicate that a physical connection relationship exists between the primary ONT and the secondary ONT. Therefore, after the port number of the downstream PON port of the primary ONT connected to the secondary ONT and the port number of the upstream PON port of the secondary ONT are sent to the OLT, the OLT can learn of the secondary ONT physically connected to the primary ONT, and further, the OLT can learn of a connection topology between the primary ONT and the secondary ONT. In a specific implementation, the port number of the downstream PON port of the primary ONT may be indicated by a PON UNI interface identifier of the primary ONT, and the port number of the upstream PON port of the secondary ONT may be indicated by an ANI interface identifier of the secondary ONT.

In another optional implementation, the connection information between the primary ONT and the secondary ONT includes an instance identifier of the primary ONT and an instance identifier of the secondary ONT. For example, the instance identifier of the primary ONT may be an instance identifier of the downstream PON port of the primary ONT, and the instance identifier of the secondary ONT may be an instance identifier of the upstream PON port of the secondary ONT. For example, the instance identifier of the downstream PON port of the primary ONT may be indicated by an instance identifier of a PON UNI instance of the primary ONT, and the entity instance identifier of the upstream PON port of the secondary ONT may be indicated by an instance identifier of an ANI-G instance of the secondary ONT.

It should be understood that the instance identifier of the secondary ONT may be alternatively another instance identifier of the secondary ONT, for example, an instance identifier of an Ethernet port of the secondary ONT or an instance identifier of a UNI interface of the secondary ONT. This is not specifically limited herein.

In this implementation, in an OMCI protocol, an association relationship between entities may be defined to reflect that configurations of devices are associated with each other and also reflect that a connection relationship exists between the devices. Therefore, an association between an entity of the primary ONT and an entity of the secondary ONT may be defined to indicate an association relationship between a configuration of the primary ONT and a configuration of the secondary ONT. Taking the PON UNI instance of the primary ONT and the ANI-G instance of the secondary ONT as examples, an association between a PON UNI entity of the primary ONT and an ANI-G entity of the secondary ONT may be defined to indicate the association between the configuration of the primary ONT and the configuration of the secondary ONT. In a specific implementation, one or some attributes of the PON UNI entity of the primary ONT are set to a pointer (pointer). The pointer stores an instance identifier of the ANI-G entity of the secondary ONT. This manner is referred to as explicit (explicit) association. In another specific implementation, an instance identifier of the PON UNI instance of the primary ONT is set to be the same as an instance identifier of the ANI-G instance of the secondary ONT. This manner is referred to as implicit (implicit) association. Therefore, after the primary ONT reports the association relationship to the OLT, the OLT may learn of a connection relationship between the primary ONT and the secondary ONT.

In this embodiment, either of the foregoing implementations indicate the connection information between the primary ONT and the secondary ONT. In addition, the information about the instance that is of the secondary ONT and that needs to be configured includes an instance identifier of the instance that is of the secondary ONT and that needs to be configured. In the all-OMCI mode, the instance identifier of the instance that is of the secondary ONT and that needs to be configured is the instance identifier that is of the secondary ONT and that indicates the connection information. In addition, in an optional implementation, the information about the secondary ONT may further include a delivery serial number (serial number, SN) of the secondary ONT, an initial password (initial password) of the secondary ONT, address information of the secondary ONT, other delivery information of the secondary ONT, and the like. The delivery serial number of the secondary ONT is also referred to as a serial number of the secondary ONT, and includes a vendor identity document (identity document, ID) and/or a version number (version number). The address information of the secondary ONT includes an Internet protocol (internet protocol, IP) address of the secondary ONT and/or a media access control (media access control, MAC) address of the secondary ONT.

It should be understood that the primary ONT is usually connected to a plurality of secondary ONTs, and therefore the primary ONT obtains information about the plurality of different secondary ONTs. Information about each secondary ONT is described above.

In this embodiment, after the primary ONT performs step 301, the primary ONT performs step 302.

In an optional implementation, before the primary ONT performs step 302, the OLT sends an obtaining request to the primary ONT. The obtaining request indicates the primary ONT to report the information about the secondary ONT connected to the primary ONT to the OLT.

Step 302: The primary ONT sends the information about the secondary ONT and mode information to the OLT.

The information about the secondary ONT includes the connection information between the primary ONT and the secondary ONT and the information about the instance that is of the secondary ONT and that needs to be configured. For details, refer to related descriptions in step 301. Details are not described herein again.

The mode information indicates a mode in which the primary ONT processes an OMCI message from the OLT. The mode information in this embodiment may be indicated by the instance identifier of the instance associated with the secondary ONT, or may be indicated by a newly defined character or variable.

If the mode information is indicated by the instance identifier of the instance associated with the secondary ONT, the mode information is an instance identifier of the instance that is of the secondary ONT and that needs to be configured, and the mode information is also an instance identifier that is of the secondary ONT and that indicates the connection information between the primary ONT and the secondary ONT. In other words, in the all-OMCI mode, the primary ONT may send, to the OLT, an instance identifier of an instance that is of a secondary ONT and that needs to be configured, so that the OLT learns of the secondary ONT that needs to be configured. In addition, the primary ONT further sends an instance identifier of the primary ONT to the OLT, so that the OLT determines, based on the instance identifier of the secondary ONT and the instance identifier of the primary ONT, that the primary ONT is connected to the secondary ONT. In addition, the OLT internally stores a correspondence between an instance identifier of the secondary ONT and a configuration mode. Therefore, the OLT may determine a configuration mode based on the instance identifier of the secondary ONT and the correspondence.

If the mode information is indicated by a newly defined character or variable, the mode information includes a mode capability and a mode status. The mode capability indicates a type of a mode that can be used by the primary ONT, and the mode capability may be having only a capability of the all-OMCI mode, having only a capability of a proxy mode, or having capabilities of both the all-OMCI mode and the proxy mode. In addition, the mode status indicates a mode currently used by the primary ONT. For example, in this embodiment, the primary ONT may have both the capability of the all-OMCI mode and the capability of the proxy mode, but the mode currently used by the primary ONT is the all-OMCI mode. In this case, the mode indicated by the mode information is the all-OMCI mode.

In this embodiment, the mode indicated by the mode information is the all-OMCI mode. In this case, no OMCI channel is established between the primary ONT and the secondary ONT, and the primary ONT may parse an OMCI message that is from the OLT and in which configuration information is encapsulated, and send the configuration information obtained after the parsing to the secondary ONT in a form of an IP packet or an Ethernet packet.

In the foregoing steps, the OMCI channel is established between the primary ONT and the OLT. Therefore, the primary ONT may transmit the information about the secondary ONT and the mode information to the OLT via an OMCI message. Optionally, the information about the secondary ONT and the mode information may be encapsulated in a content field of the OMCI message.

Step 303: The OLT encapsulates an OMCI message 1 based on the information about the secondary ONT and the mode information that are sent by the primary ONT.

Specifically, the OLT first determines a mode of data transmission between the primary ONT and the secondary ONT based on the mode information, then the OLT determines the configuration information that needs to be transmitted to the secondary ONT, and finally, the OLT encapsulates the configuration information of the secondary ONT in the OMCI message 1 based on the mode indicated by the mode information.

In an optional implementation, if the mode information is indicated by the instance identifier of the instance associated with the secondary ONT, and the OLT stores the correspondence between an instance identifier of the secondary ONT and a configuration mode, the OLT may determine, based on the instance identifier of the secondary ONT and the correspondence, that the configuration mode is the all-OMCI mode.

In another optional implementation, if the mode information is indicated by a newly defined character or variable, the OLT may directly determine, based on the mode information, that the mode of data transmission between the primary ONT and the secondary ONT is the all-OMCI mode. For example, the OLT determines, based on the mode status in the mode information, that the mode of data transmission between the primary ONT and the secondary ONT is the all-OMCI mode.

In another optional implementation, if the mode information is indicated by a newly defined character or variable, the OLT may switch the mode status based on the mode capability of the primary ONT. For example, if the mode capability in the mode information is having both the capability of the all-OMCI mode and the capability of the proxy mode, and the mode status is the proxy mode, the OLT may switch the mode status from the proxy mode to the all-OMCI mode.

In this embodiment, the OLT may determine the mode of data transmission between the primary ONT and the secondary ONT in either of the foregoing two manners. This is not specifically limited herein. In this embodiment, only an example in which the OLT determines, based on the mode information, to use the all-OMCI mode is used for description.

Then the OLT determines, based on the instance identifier of the instance that is of the secondary ONT and that needs to be configured, the configuration information that needs to be sent to the secondary ONT. It should be understood that if instance identifiers of instances of the secondary ONT that need to be configured are different, it indicates that the instances of the secondary ONT that need to be configured are different, and configuration information determined by the OLT is also different. For example, if the instance identifier of the instance that is of the secondary ONT and that needs to be configured is an instance identifier of an ANI-G instance, the configuration information determined by the OLT is for configuring an ANI interface. For another example, if the instance identifier of the instance that is of the secondary ONT and that needs to be configured is an instance identifier of an Ethernet port instance, the configuration information determined by the OLT is for configuring an Ethernet port. For example, the configuration information includes any one of ANI management configuration information, UNI management configuration information, connection management configuration information, and user management configuration information.

It should be understood that if the OLT receives a plurality of different instance identifiers, it indicates that the OLT needs to separately configure different instances for the secondary ONT. In this case, the OLT sends configuration information by using a plurality of OMCI messages, and the configuration information carried in all of the OMCI messages is for configuring different instances. In other words, an OMCI message sent by the OLT each time is for configuring only one instance of the secondary ONT.

Because the mode information indicates to use the all-OMCI mode, the OLT encapsulates the configuration information of the secondary ONT in the OMCI message 1 based on the all-OMCI mode indicated by the mode information. When encapsulating the OMCI message 1, the OLT only needs to directly encapsulate the configuration information of the secondary ONT in a message contents field of the OMCI message 1, and does not need to perform additional encapsulation processing on the configuration information before encapsulating the configuration information in the content field. In addition, an instance identifier that is of an instance and that corresponds to the configuration information and an instance identifier that is of an instance and that indicates the connection relationship between the primary ONT and the secondary ONT are a same instance identifier, namely, the first identification information described in the embodiment corresponding to FIG. 2. The OLT encapsulates the instance identifier in a message identifier field, so that the primary ONT can learn of, based on the instance identifier in the message identifier field, the connection relationship between the primary ONT and the secondary ONT and a mode that should be used by the primary ONT to process the OMCI message 1. For example, the instance identifier in the message identifier field may be an instance identifier of an ANI-G instance of the secondary ONT, and an entity identifier in the message identifier field is an ANI-G entity identifier. For example, the instance identifier in the message identifier field may be an instance identifier of an Ethernet port instance of the secondary ONT, and an entity identifier in the message identifier field is an Ethernet port entity identifier of the secondary ONT. In subsequent embodiments, only an example in which the instance identifier in the message identifier field may be an instance identifier of an ANI-G instance of the secondary ONT is used for description.

It can be learned from the descriptions of step 301 that the information about the secondary ONT includes the connection information between the primary ONT and the secondary ONT and information about the instance that is of the secondary ONT and that needs to be configured.

In an optional implementation, the connection information between the primary ONT and the secondary ONT includes the port number of the downstream PON port of the primary ONT connected to the secondary ONT and the port number of the upstream PON port of the secondary ONT. Optionally, the port number of the downstream PON port of the primary ONT may be indicated by a PON UNI interface identifier of the primary ONT, and the port number of the upstream PON port of the secondary ONT may be indicated by an ANI interface identifier of the secondary ONT. In this case, the connection information between the primary ONT and the secondary ONT includes a PON UNI interface identifier of the primary ONT and an ANI interface identifier of the secondary ONT. In this case, the OLT converts the ANI interface identifier of the secondary ONT into an instance identifier of an ANI-G instance of the secondary ONT, and encapsulates the instance identifier of the ANI-G instance in the message identifier field of the OMCI message 1.

In another optional implementation, the connection information between the primary ONT and the secondary ONT includes the instance identifier of the downstream PON port of the primary ONT connected to the secondary ONT and the instance identifier of the upstream PON port of the secondary ONT. Optionally, the instance identifier of the downstream PON port of the primary ONT may be indicated by an instance identifier of a PON UNI instance of the primary ONT, and the instance identifier of the upstream PON port of the secondary ONT may be indicated by an instance identifier of an ANI-G instance of the secondary ONT. In this case, the OLT directly encapsulates the instance identifier of the ANI-G instance of the secondary ONT in the message identifier field of the OMCI message 1.

In this embodiment, the OLT may encapsulate the message identifier field in either of the foregoing two manners. This is not specifically limited herein.

In addition, the OMCI message 1 is a message to be sent to the primary ONT. Therefore, the OMCI message 1 should further carry an identifier indicating the primary ONT. Specifically, the identifier indicating the primary ONT may be indicated by a GEM port ID of the primary ONT. The GEM port ID of the primary ONT is usually encapsulated in a GEM header information field of the OMCI message 1.

For example, a format of the OMCI message 1 that is encapsulated by the OLT and that is to be sent to the primary ONT is shown in the following Table 2.

**Table 2**

| | | | | | | |
|---|---|---|---|---|---|---|
| GEM header information (including the GEM port ID of the primary ONT) | Transaction correlation identifier | Message type | Device identifier | Message identifier (an entity identifier corresponding to the configuration information of the secondary ONT + an instance identifier corresponding to the configuration information of the secondary ONT) | Message contents (the configuration information of the secondary ONT) | OMCI trailer |

Because the OMCI message 1 is to be sent to the primary ONT, the GEM header information field includes the GEM port ID of the primary ONT. The message type field indicates a specific action or purpose of the OMCI message 1. For example, if the message type is "set (set)", it indicates setting one or more attributes of a managed entity, in other words, a configuration operation is performed on an instance of the managed entity. The message identifier field carries the entity identifier (for example, an AIN-G entity identifier) corresponding to the configuration information of the secondary ONT and the instance identifier (for example, an AIN-G instance identifier of the secondary ONT) corresponding to the configuration information of the secondary ONT. Taking the AIN-G instance identifier as an example, the AIN-G instance identifier indicates that the primary ONT is associated with the secondary ONT by using an ANI interface and the all-OMCI mode is used for data transmission between the primary ONT and the secondary ONT. Because the AIN-G instance identifier is associated with the secondary ONT, the primary ONT may learn of, based on the AIN-G instance identifier of the secondary ONT, the secondary ONT that the OMCI message 1 is used to configure. Therefore, the AIN-G instance identifier indicates the secondary ONT to be configured by using the OMCI message 1. The message contents field includes the configuration information of the secondary ONT, and the configuration information is for configuring an AIN-G instance of the secondary ONT, in other words, the configuration information is for configuring an instance corresponding to an instance identifier in the message identifier field.

For example, if the configuration information of the secondary ONT is for configuring a port switch of an Ethernet port 2 of a secondary ONT 2, an entity ID of the first 2 bytes carried in the message identifier field of the OMCI message is an Ethernet port entity ID, an instance ID of the last 2 bytes carried in the message identifier field of the OMCI message is an ID of an Ethernet port instance 2 of the secondary ONT 2, the message contents field carries port switch information, and the port switch information is used to configure the port switch of the Ethernet port 2 of the secondary ONT 2.

After the OLT encapsulates the OMCI message 1, the OLT performs step 304.

Step 304: The OLT sends the OMCI message 1 to the primary ONT.

Specifically, the OLT sends the OMCI message 1 through the OMCI channel between the OLT and the primary ONT. After the primary ONT receives the OMCI message 1, the primary ONT performs step 305.

Step 305: The primary ONT parses the OMCI message 1 to obtain the configuration information of the secondary ONT from the message contents field of the OMCI message 1.

In this embodiment, the primary ONT parses each field of the OMCI message 1. Specifically, the primary ONT parses the message type field of the OMCI message 1 to determine that the OMCI message 1 is intended for a configuration operation; parses the message identifier field, determines, based on the AIN-G entity identifier and the AIN-G instance identifier, the secondary ONT connected to the primary ONT, determines that the all-OMCI mode is used between the primary ONT and the secondary ONT, and may further determine that the OMCI message 1 is for configuring an AIN-G instance of the secondary ONT; and parses the message contents field to determine the configuration information required for configuring the instance of the secondary ONT.

Step 306: The primary ONT encapsulates, in a message 1, the configuration information of the secondary ONT and the instance identifier corresponding to the configuration information.

The message 1 is a message using a message format that can be identified by the secondary ONT. To be specific, data can be transmitted between the primary ONT and the secondary ONT via the message 1, and the configuration information and the instance identifier can be transmitted via the message 1. The message 1 may be an Ethernet message, an IP message, an OMCI message, or another message that can be identified by the secondary ONT. This is not specifically limited herein.

If no OMCI channel is established between the primary ONT and the secondary ONT, data transmission cannot be performed between the primary ONT and the secondary ONT via an OMCI message, and the primary ONT may encapsulate, in an Ethernet message or an IP message, the configuration information and the instance identifier corresponding to the configuration information.

In an optional implementation, the primary ONT encapsulates, in an Ethernet message, the configuration information and the instance identifier corresponding to the configuration information, in other words, the message 1 is an Ethernet message. In this case, an address of the secondary ONT that is carried in the message 1 is the MAC address of the secondary ONT.

For example, a format of the Ethernet message (namely, the message 1) that is encapsulated by the primary ONT and that is to be sent to the secondary ONT is shown in the following Table 3.

**Table 3**

| | | | | | | | |
|---|---|---|---|---|---|---|---|
| Preamble | SFD | Destination MAC address | Source MAC address | Length | Type | Data and padding | Checksum |

The preamble field is used to synchronize sending and receiving rates of two parties in a data transmission process. The SFD field is a short for start-of-frame delimiter, and is used to identify the start of an Ethernet frame. The destination MAC address field indicates a receiver of the frame, and is used to encapsulate the MAC address of the secondary ONT. The source MAC address field indicates a sender of the frame, and is used to encapsulate a MAC address of the primary ONT. The data and padding field is used to encapsulate the configuration information of the secondary ONT and the instance identifier corresponding to the configuration information.

In another optional implementation, the primary ONT encapsulates, in an IP message, the configuration information and the instance identifier corresponding to the configuration information, in other words, the message 1 is an IP message. In this case, an address of the secondary ONT that is carried in the message 1 is an IP address of the secondary ONT.

For example, a format of the IP message (namely, the message 1) that is encapsulated by the primary ONT and that is to be sent to the secondary ONT is shown in the following Table 4.

**Table 4**

| Version | Header length | Service type | Total length | |
|---|---|---|---|---|
| Identification | | | Flags | Fragment offset |
| Time to live | | Protocol | Header checksum | |
| Source IP address | | | | |
| Destination IP address | | | | |
| Options | | | | |
| Data | | | | |

The source IP address field indicates a sender of the IP message, and is used to encapsulate an IP address of the primary ONT. The destination IP address field indicates a receiver of the IP message, and is used to encapsulate the IP address of the secondary ONT. The data field is used to encapsulate the configuration information of the secondary ONT and the instance identifier corresponding to the configuration information.

It is to be noted that if the primary ONT receives, within a period of time, a plurality of OMCI messages for configuring a secondary ONT, the primary ONT may encapsulate, in one Ethernet message or IP message, configuration information and instance identifiers that are obtained by parsing the plurality of OMCI messages. In other words, the Ethernet message or the IP message in step 306 may carry configuration information and an instance identifier in only one OMCI message, or may carry configuration information and instance identifiers in a plurality of OMCI messages. This is not specifically limited herein. For example, the primary ONT receives three OMCI messages for configuring the secondary ONT 2. The three OMCI messages are an OMCI message A, an OMCI message B, and an OMCI message C. A message contents field of the OMCI message A carries configuration information a and an instance identifier a, a message contents field of the OMCI message B carries configuration information b and an instance identifier b, and a message contents field of the OMCI message C carries configuration information c and an instance identifier c. In this case, the primary ONT may encapsulate, in one Ethernet message, the configuration information and the instance identifiers in the message contents fields of the three OMCI messages. In this case, a data and padding field of the Ethernet message carries three groups of information: the configuration information a and the instance identifier a, the configuration information b and the instance identifier b, and the configuration information c and the instance identifier c.

If an OMCI channel is established between the primary ONT and the secondary ONT, data transmission may be performed between the primary ONT and the secondary ONT via an OMCI message, and the primary ONT may encapsulate, in an OMCI message, the configuration information and the instance identifier corresponding to the configuration information.

For example, a format of an OMCI message 1' (namely, the message 1) that is encapsulated by the primary ONT and that is to be sent to the secondary ONT is shown in the following Table 5.

**Table 5**

| | | | | | | |
|---|---|---|---|---|---|---|
| GEM header information (including a GEM port ID of the secondary ONT) | Transaction correlation identifier | Message type | Device identifier | Message identifier (an entity identifier corresponding to the configuration information of the secondary ONT + an instance identifier corresponding to the configuration information of the secondary ONT) | Message contents (the configuration information of the secondary ONT) | OMCI trailer |

Because the OMCI message 1' is to be sent to the secondary ONT, the GEM header information field includes the GEM port ID of the secondary ONT. The message type field indicates a specific action or purpose of the OMCI message 1'. For example, if the message type is "set (set)", it indicates setting one or more attributes of a managed entity, in other words, a configuration operation is performed on an instance of the managed entity. The message identifier field carries the entity identifier corresponding to the configuration information of the secondary ONT and the instance identifier corresponding to the configuration information of the secondary ONT, for example, an AIN-G entity identifier and an AIN-G instance identifier of the secondary ONT. The message contents field includes the configuration information of the secondary ONT, and the configuration information is for configuring an instance corresponding to the instance identifier in the message identifier field.

It should be understood that in this implementation, an OMCI channel needs to be established between the primary ONT and the secondary ONT. For a specific manner of establishing the channel, refer to step 401 in the embodiment corresponding to FIG. 4.

In this embodiment, after the primary ONT encapsulates the message 1, the primary ONT performs step 307.

Step 307: The primary ONT sends the message 1 to the secondary ONT.

Step 308: The secondary ONT parses the message 1 to obtain the configuration information and the instance identifier corresponding to the configuration information in the message 1, and perform configuration based on an instance corresponding to the instance identifier.

Step 309: The secondary ONT sends a response message 1 to the primary ONT.

The response message 1 and the message 1 are messages of a same type. For example, if the message 1 is an Ethernet message, the response message 1 is also an Ethernet message. For another example, if the message 1 is an IP message, the response message 1 is also an IP message.

If the secondary ONT successfully configures the instance corresponding to the instance identifier, the response message 1 carries the instance identifier and indication information indicating that the configuration succeeds.

Step 310: The primary ONT sends a response message 2 to the OLT.

The response message 2 is an OMCI message. A GEM header information field of the OMCI message 2 includes a GEM port ID of the OLT. An entity identifier and an instance identifier that are carried in a message identifier field are the same as the entity identifier and the instance identifier that are carried in the OMCI message 1. A message contents field includes the indication information indicating that the configuration succeeds and the instance identifier (namely, the instance identifier corresponding to the configuration information) that are carried in the response message 1. Therefore, the OLT can determine, based on the indication information indicating that the configuration succeeds and the instance identifier that are carried in the response message 2, that the instance corresponding to the instance identifier has been successfully configured. Therefore, the OLT may continue to configure another instance for the secondary ONT.

In this embodiment, the OLT may encapsulate, in the OMCI message 1 based on the information about the secondary ONT that is reported by the primary ONT, the configuration information for configuring the secondary ONT, and send the OMCI message 1 to the primary ONT, and the primary ONT can parse the OMCI message 1 to obtain the configuration information of the secondary ONT that is carried in the OMCI message 1, and send the configuration information to the secondary ONT by using a message (namely, the message 1) that can be identified by the secondary ONT. Therefore, the OLT can configure the secondary ONT. Because the OLT can configure the primary ONT, the OLT can implement centralized management of a plurality of levels of ONTs.

FIG. 4 shows a multi-level PON network management method when a proxy mode is used. A downstream PON port of an OLT is connected to an upstream PON port of a primary ONT (namely, an ANI interface of the primary ONT), and a downstream PON port (namely, a PON UNI interface) of the primary ONT is connected to an upstream PON port of a secondary ONT (namely, an ANI interface of the secondary ONT) via a fiber. An OMCI model is used for data transmission between the OLT and the primary ONT, in other words, an OMCI message is used for data exchange between the OLT and the primary ONT.

In this implementation, an OMCI channel can also be established between the primary ONT and the secondary ONT, and the primary ONT includes an OMCI proxy module configured to convert an OMCI message, and the OMCI proxy module can convert an OMCI message from the OLT into an OMCI message that can be identified by the secondary ONT, and transmit the OMCI message to the secondary ONT through the OMCI channel between the primary ONT and the secondary ONT. Specifically, steps performed by the OLT, the primary ONT, and the secondary ONT include the following steps.

Step 401: The primary ONT establishes the OMCI channel between the primary ONT and the secondary ONT.

In this embodiment, when the primary ONT is connected to the OLT for the first time, the primary ONT triggers an OMCI initialization procedure to establish an OMCI channel between the OLT and the primary ONT, so that the OLT and the primary ONT can exchange data with each other via an OMCI message. Then, when a secondary ONT is connected to the primary ONT, the primary ONT sends a broadcast message to the secondary ONT, so that the secondary ONT sends information used for authentication to the primary ONT. Then the primary ONT performs authentication on the secondary ONT. If the authentication succeeds, the primary ONT allocates an ONT ID to the secondary ONT. In addition, the secondary ONT immediately creates an OMCI GEM port. The OMCI GEM port is a port of a logical channel used to carry an OMCI message between the secondary ONT and the primary ONT. An identifier (namely, an OMCI GEM port ID) of the OMCI GEM port is equal to a value of the ONT ID. Therefore, an OMCI channel is established between the primary ONT and the secondary ONT, and data transmission may be performed between the primary ONT and the secondary ONT via an OMCI message. The information used for authentication includes a delivery serial number (serial number, SN) of the secondary ONT, an initial password (initial password) of the secondary ONT, address information of the secondary ONT, other delivery information of the secondary ONT, and the like. For details, refer to related descriptions in step 301. Details are not described herein again.

Step 402: The primary ONT obtains information about the secondary ONT connected to the primary ONT.

The information about the secondary ONT includes connection information between the primary ONT and the secondary ONT and information about an instance that is of the secondary ONT and that needs to be configured.

In a specific implementation, the connection information between the primary ONT and the secondary ONT includes an instance identifier of the downstream PON port of the primary ONT connected to the secondary ONT and an instance identifier of an instance of a proxy entity corresponding to the secondary ONT. Specifically, the instance identifier of the downstream PON port of the primary ONT may be indicated by an instance identifier of a PON UNI instance of the primary ONT, and the instance identifier of the instance of the proxy entity corresponding to the secondary ONT may be indicated by an instance identifier of a proxy (proxy) instance of the secondary ONT.

Specifically, one or some attributes of a PON UNI entity of the primary ONT may be set to a pointer (pointer). The pointer stores an instance identifier of an instance of a proxy entity corresponding to the secondary ONT. This manner is referred to as explicit (explicit) association. Alternatively, the instance identifier of the PON UNI instance of the primary ONT may be set to be the same as the instance identifier of the proxy instance corresponding to the secondary ONT. This manner is referred to as implicit (implicit) association. Therefore, after the primary ONT reports the association relationship to the OLT, the OLT may learn that the primary ONT uses a proxy mode, and the OLT encapsulates configuration information of the secondary ONT based on the proxy mode.

Optionally, the information about the secondary ONT may further include the delivery serial number SN of the secondary ONT, the initial password of the secondary ONT, the address information of the secondary ONT, other delivery information of the secondary ONT, and the like. This is not specifically limited herein.

In an optional implementation, because the OMCI channel is established between the primary ONT and the secondary ONT, an OMCI message may be used when the primary ONT obtains the information about the secondary ONT.

For example, the primary ONT may send an OMCI message a to the secondary ONT. A GEM header information field of the OMCI message a carries a GEM port ID of the secondary ONT, and a message contents field of the OMCI message a carries indication information indicating to obtain the information about the secondary ONT. Then the secondary ONT returns an OMCI message b to the primary ONT. A GEM header information field of the OMCI message b carries a GEM port ID of the primary ONT, and a message contents field of the OMCI message b carries the information about the secondary ONT. Then the primary ONT obtains the information about the secondary ONT from the message contents field of the OMCI message b.

In another optional implementation, the primary ONT may alternatively obtain the information about the secondary ONT by using a message or a packet that can be identified by the secondary ONT, for example, an Ethernet packet or an IP packet. This is not specifically limited herein.

Step 403: The primary ONT sends the information about the secondary ONT and mode information to the OLT.

The information about the secondary ONT includes the connection information between the primary ONT and the secondary ONT and the information about the instance that is of the secondary ONT and that needs to be configured. For details, refer to related descriptions in step 301. Details are not described herein again.

The mode information indicates a mode in which the primary ONT processes an OMCI message from the OLT. The mode information in this embodiment may be indicated by the instance identifier of the instance associated with the secondary ONT, or may be indicated by a newly defined character or variable.

If the mode information is indicated by the instance identifier of the instance associated with the secondary ONT, the mode information is an instance identifier of a proxy instance of a proxy module in the primary ONT. Different secondary user-side devices correspond to instance identifiers of different proxy instances. The instance identifier of the proxy instance is also the instance identifier that is of the secondary ONT and that indicates the connection information between the primary ONT and the secondary ONT. In other words, in the proxy mode, the primary ONT may send an instance identifier of a proxy instance to the OLT, so that the OLT learns of the secondary ONT that needs to be configured. In addition, the primary ONT further sends an instance identifier of the primary ONT to the OLT, so that the OLT determines, based on the instance identifier of the proxy instance and the instance identifier of the primary ONT, that the primary ONT is connected to the secondary ONT. In addition, the OLT internally stores a correspondence between an instance identifier of a proxy instance and a configuration mode. Therefore, the OLT may determine a configuration mode based on the instance identifier of the proxy instance and the correspondence.

If the mode information is indicated by a newly defined character or variable, the mode information includes a mode capability and a mode status. The mode capability indicates a type of a mode that can be used by the primary ONT, and the mode capability may be having only a capability of an all-OMCI mode, having only a capability of the proxy mode, or having capabilities of both the all-OMCI mode and the proxy mode. In addition, the mode status indicates a mode currently used by the primary ONT. For example, in this embodiment, the primary ONT may have both the capability of the all-OMCI mode and the capability of the proxy mode, but the mode currently used by the primary ONT is the proxy mode. In this case, the mode information indicates that a mode of data transmission between the primary ONT and the secondary ONT is the proxy mode.

In this embodiment, the mode of data transmission between the primary ONT and the secondary ONT is the proxy mode. In this case, the OMCI channel is established between the primary ONT and the secondary ONT, and the primary ONT performs secondary encapsulation on the configuration information in a message contents field of the OMCI message from the OLT, to convert the OMCI message into an OMCI message that can be identified by the secondary ONT and send the OMCI message to the secondary ONT.

In addition, because the proxy mode is used, in the information about the secondary ONT sent by the primary ONT to the OLT, an instance identifier of a proxy instance of the secondary ONT may indicate the connection information between the primary ONT and the secondary ONT. For details, refer to related descriptions in step 401. Details are not described herein again.

In the foregoing steps, the OMCI channel is established between the primary ONT and the OLT. Therefore, the primary ONT may transmit the information about the secondary ONT and the mode information to the OLT via an OMCI message. Optionally, the information about the secondary ONT and the mode information may be encapsulated in a content field of the OMCI message.

Step 404: The OLT encapsulates an OMCI message 2 based on the information about the secondary ONT and the mode information that are sent by the primary ONT.

Specifically, the OLT first determines, based on the mode information, a mode in which the primary ONT processes the OMCI message 2, then the OLT determines the configuration information that needs to be transmitted to the secondary ONT, and finally, the OLT encapsulates the configuration information of the secondary ONT in the OMCI message 2 based on the mode indicated by the mode information.

The OLT determines, based on the mode information, that the mode of data transmission between the primary ONT and the secondary ONT is the proxy mode.

Then the OLT determines, based on the instance identifier of the instance that is of the secondary ONT and that needs to be configured, the configuration information that needs to be sent to the secondary ONT. It should be understood that if instance identifiers of instances of the secondary ONT that need to be configured are different, it indicates that the instances of the secondary ONT that need to be configured are different, and configuration information determined by the OLT is also different. For example, the configuration information includes any one of ANI management configuration information, UNI management configuration information, connection management configuration information, and user management configuration information. For details, refer to related descriptions in step 303. Details are not described herein again.

Then, in the proxy mode, the OLT determines, based on the information about the secondary ONT, the configuration information, and an instance identifier corresponding to the configuration information, at least two fields of an OMCI message 3 that need to be sent to the secondary ONT, and encapsulates the at least two fields in a message contents field of the OMCI message 2 to be sent to the primary ONT. The at least two fields include a message contents field, a message identifier field, a message type field, and the like. The OLT encapsulates the configuration information in the message contents field, and encapsulates, in the message identifier field, an entity identifier and the instance identifier that correspond to the configuration information.

Optionally, the at least two fields of the OMCI message 3 further include one or more of a transaction correlation identifier field, a device identifier field, an OMCI trailer field, and a GEM header information field.

In an optional implementation, the at least two fields of the OMCI message 3 include the message type field, the message identifier field, and the message contents field. For example, the at least two fields of the OMCI message 3 that need to be sent to the secondary ONT are shown in the following Table 6-1.

**Table 6-1**

| | | |
|---|---|---|
| Message type | Message identifier (the entity identifier corresponding to the configuration information of the secondary ONT + the instance identifier corresponding to the configuration information of the secondary ONT) | Message contents (the configuration information of the secondary ONT) |

The message type field is used to carry a specific action or purpose of the OMCI message 3. It may be understood that the message type field indicates an operation performed by the OLT on the secondary ONT. For example, if the message type is "set (set)", it indicates setting one or more attributes of a managed entity, in other words, a configuration operation is performed on an instance of the managed entity. The message identifier field carries the entity identifier corresponding to the configuration information of the secondary ONT and the instance identifier corresponding to the configuration information of the secondary ONT. The message contents field includes the configuration information of the secondary ONT, and the configuration information is for configuring an instance corresponding to the instance identifier.

In another optional implementation, in addition to the message type field, the message identifier field, and the message contents field, the at least two fields further include the transaction correlation identifier field, the device identifier field, and the OMCI trailer field. For example, the at least two fields of the OMCI message that need to be sent by the OLT to the secondary ONT are shown in the following Table 6-2.

**Table 6-2**

| | | | | | |
|---|---|---|---|---|---|
| Transaction correlation identifier (optional) | Message type | Device identifier (optional) | Message identifier (the entity identifier corresponding to the configuration information of the secondary ONT + the instance identifier corresponding to the configuration information of the secondary ONT) | Message contents (the configuration information of the secondary ONT) | OMCI trailer (optional) |

For descriptions of the transaction correlation identifier field, the device identifier field, and the OMCI trailer field, refer to related descriptions in Table 1 or Table 2. Details are not described herein again.

After the OLT determines the at least two fields of the OMCI message that need to be sent to the secondary ONT, the OLT encapsulates, in the OMCI message 2 to be sent by the OLT to the primary ONT, the at least two fields (for example, the fields shown in Table 6-1 or Table 6-2) of the OMCI message 3 that need to be sent to the secondary ONT.

For example, the OMCI message 2 to be sent by the OLT to the primary ONT may be shown in the following Table 7.

**Table 7**

| | | | | | | |
|---|---|---|---|---|---|---|
| GEM header information (including the GEM port ID of the primary ONT) | Transaction correlation identifier | Message type | Device identifier | Message identifier (a proxy entity identifier + a proxy instance identifier) | Message contents (the at least two fields of the OMCI message 3) | OMCI trailer |

Because the OMCI message 2 is to be sent to the primary ONT, the GEM header information field includes the GEM port ID of the primary ONT. The message type field indicates a specific action or purpose of the OMCI message 2. The message identifier field carries a proxy entity identifier and a proxy instance identifier. The proxy entity identifier indicates that the primary ONT is associated with the secondary ONT by using a proxy entity and the proxy mode is used for data transmission between the primary ONT and the secondary ONT. Because the proxy instance identifier is associated with the secondary ONT, the primary ONT may learn of, by parsing the proxy instance identifier of the secondary ONT, the secondary ONT that the OMCI message 2 is used to configure. Therefore, the proxy instance identifier indicates the secondary ONT to be configured by using the OMCI message 2. The message contents field includes the at least two fields of the OMCI message 3 that need to be sent to the secondary ONT, for example, the main fields shown in Table 6-1 or Table 6-2.

After the OLT encapsulates the OMCI message 2, the OLT performs step 405.

Step 405: The OLT sends the OMCI message 2 to the primary ONT.

Specifically, the OLT sends the OMCI message 2 through the OMCI channel between the OLT and the primary ONT. After the primary ONT receives the OMCI message 2, the primary ONT performs step 406.

Step 406: The primary ONT parses the OMCI message 2 to obtain the at least two fields from the message contents field of the OMCI message 2.

In this embodiment, the primary ONT parses the message type field of the OMCI message 2 to determine that the OMCI message is intended for a configuration operation; parses the message identifier field, determines, based on the proxy entity identifier, that the primary ONT is associated with the secondary ONT by using the proxy entity and the proxy mode is used, and determines, based on the proxy instance identifier, the secondary ONT that is to be configured by using the OMCI message 2 and that is connected to the primary ONT; and parses the message contents field to obtain the at least two fields. The at least two fields carry the configuration information. However, in the proxy mode, the primary ONT does not continue to parse the at least two fields. Therefore, the primary ONT cannot determine an instance to be configured by using the configuration information in the at least two fields. In other words, the primary ONT can learn of only the secondary ONT that is to be configured by using the OMCI message 2 and that is connected to the primary ONT, but cannot determine the instance that is of the secondary ONT and that the OMCI message 2 is used to configure.

Step 407: The primary ONT encapsulates the OMCI message 3 based on the information about the secondary ONT and the at least two fields.

In this embodiment, the at least two fields obtained from the OMCI message 2 include the information about the secondary ONT, and the at least two fields are fields based on an OMCI message. Therefore, the primary ONT adds a field on the basis of the at least two fields based on the information about the secondary ONT, to obtain the OMCI message 3.

Specifically, the primary ONT encapsulates the GEM port ID of the secondary ONT in a GEM header information field, and adds the GEM header information field to the at least two fields. In addition, the primary ONT further adds another field based on the information about the secondary ONT until the at least two fields and the another field are assembled into a complete OMCI message (namely, the OMCI message 3).

For example, if the at least two fields are shown in Table 6-2, the primary ONT only needs to add the GEM header information field to obtain the OMCI message 3. The OMCI message 3 may be shown in the following Table 8.

**Table 8**

| | | | | | | |
|---|---|---|---|---|---|---|
| GEM header information (including the GEM port ID of the secondary ONT) | Transaction correlation identifier | Message type | Device identifier | Message identifier (the entity identifier corresponding to the configuration information of the secondary ONT + the instance identifier corresponding to the configuration information of the secondary ONT) | Message contents (the configuration information of the secondary ONT) | OMCI trailer |

For example, if the at least two fields are shown in Table 6-1, in addition to the GEM header information field, the primary ONT needs to add a transaction correlation identifier field, a message type field, a device identifier field, an OMCI trailer field, and the like. Then the primary ONT may obtain the OMCI message 3 shown in Table 8.

Because the OMCI message 3 is to be sent to the secondary ONT, the GEM header information field includes the GEM port ID of the secondary ONT. The message type field indicates a specific action or purpose of the OMCI message 3. The message identifier field carries the entity identifier corresponding to the configuration information of the secondary ONT and the instance identifier that is of the instance and that corresponds to the configuration information of the secondary ONT. The message contents field includes the configuration information of the secondary ONT.

Step 408: The primary ONT sends the OMCI message 3 to the secondary ONT.

Specifically, the primary ONT sends the OMCI message 3 through the OMCI channel established between the primary ONT and the secondary ONT.

Step 409: The secondary ONT parses the OMCI message 3 to obtain the configuration information of the secondary ONT and the instance identifier corresponding to the configuration information, and configure the instance according to the configuration information.

Specifically, the secondary ONT sequentially parses all fields of the OMCI message 3, and obtains the instance identifier that is in the message identifier field of the OMCI message 3 and that corresponds to the configuration information and the configuration information in the message contents field of the OMCI message 3. Then the secondary ONT configures, according to the configuration information, the instance corresponding to the instance identifier.

Step 410: The secondary ONT sends a response message 3 to the primary ONT.

The response message 3 may be an OMCI message, or may be an Ethernet packet or an IP packet. This is not specifically limited herein. The response message 3 carries the instance identifier and indication information indicating that the configuration succeeds.

In an optional implementation, when the response message 3 is an OMCI message, the GEM header information field of the OMCI message 3 includes the GEM port ID of the primary ONT. An entity identifier and an instance identifier that are carried in a message identifier field of the response message 3 are consistent with the entity identifier and the instance identifier that are carried in the identifier field of the OMCI message 3. The message contents field includes the instance identifier and the indication information indicating that the configuration succeeds.

Step 411: The primary ONT sends a response message 4 to the OLT.

The response message 4 is an OMCI message. A GEM header information field of the OMCI message 4 includes a GEM port ID of the OLT. An entity identifier and an instance identifier that are carried in a message identifier field of the response message 4 are consistent with the entity identifier and the instance identifier that are carried in the identifier field of the OMCI message 2. A message contents field includes the indication information indicating that the configuration succeeds and the instance identifier that are carried in the response message 3. Therefore, the OLT can determine, based on the indication information indicating that the configuration succeeds and the instance identifier that are carried in the response message 4, that the instance corresponding to the instance identifier has been successfully configured. Therefore, the OLT may continue to configure another instance for the secondary ONT.

In this embodiment, the OLT may encapsulate, in the OMCI message 2 based on the information about the secondary ONT that is reported by the primary ONT and the at least two fields for configuring the secondary ONT, and send the OMCI message 2 to the primary ONT, and the primary ONT can parse the OMCI message 2 to obtain the at least two fields of the secondary ONT that are carried in the OMCI message 2, assemble the at least two fields into the OMCI message 3 that can be identified by the secondary ONT, and send the OMCI message 3 to the secondary ONT. Because the at least two fields include the information about the secondary ONT, the secondary ONT can perform a configuration operation according to the configuration information. Therefore, the OLT can configure the secondary ONT. Because the OLT can configure the primary ONT, the OLT can implement centralized management of a plurality of levels of ONTs.

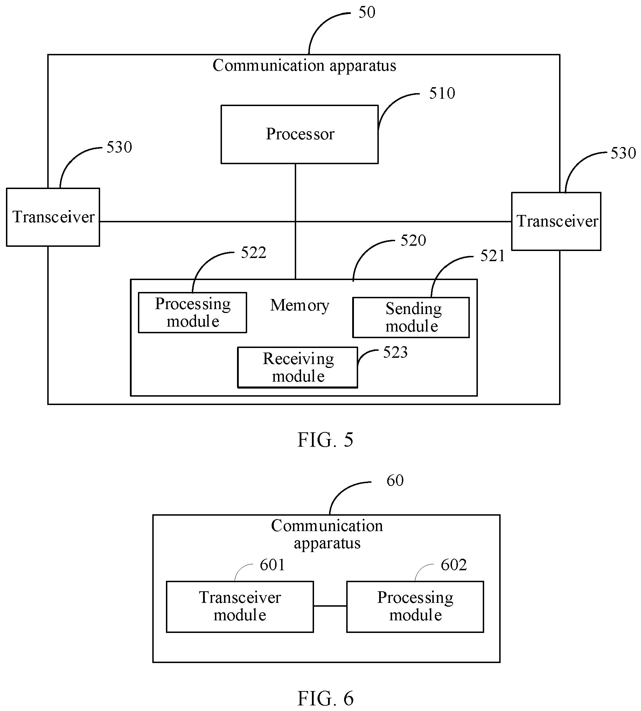

In addition, an embodiment of this application further provides a communication apparatus 50. FIG. 5 is a schematic diagram of a structure of a communication apparatus according to an embodiment of this application.

The communication apparatus 50 may be configured to perform the method in the embodiments corresponding to FIG. 2, FIG. 3, and FIG. 4.

As shown in FIG. 5, the communication apparatus 50 may include a processor 510, a memory 520, and a transceiver 530. The processor 510 is coupled to the memory 520, and the processor 510 is coupled to the transceiver 530.

The transceiver 530 may also be referred to as a transceiver unit, a transceiver apparatus, or the like. Optionally, a component that is configured to implement a receiving function and that is in the transceiver unit may be considered as a receiving unit, and a component that is configured to implement a sending function and that is in the transceiver unit may be considered as a sending unit. In other words, the transceiver unit includes the receiving unit and the sending unit. The receiving unit may also be referred to as a receiver, an input port, a receiver circuit, or the like. The sending unit may be referred to as a transmitter, a transmitter circuit, or the like. For example, the transceiver 530 may be an optical module.

The processor 510 may be a central processing unit (central processing unit, CPU), a network processor (network processor, NP), or a combination of a CPU and an NP. Alternatively, the processor may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field programmable gate array, FPGA), a generic array logic (generic array logic, GAL), or any combination thereof. The processor 510 may be one processor, or may include a plurality of processors.

In addition, the memory 520 is mainly configured to store a software program and data. The memory 520 may exist independently, and is connected to the processor 510. Optionally, the memory 520 and the processor 510 may be integrated, for example, integrated into one or more chips. The memory 520 can store program code for executing the technical solutions in embodiments of this application, and the execution is controlled by the processor 510. The executed computer program code may also be considered as a driver of the processor 510. The memory 520 may include a volatile memory (volatile memory), for example, a random-access memory (random-access memory, RAM). Alternatively, the memory may include a non-volatile memory (non-volatile memory), for example, a read-only memory (read-only memory, ROM), a flash memory (flash memory), a hard disk drive (hard disk drive, HDD), or a solid-state drive (solid-state drive, SSD). Alternatively, the memory 520 may include a combination of the foregoing types of memories. The memory 520 may be one memory, or may include a plurality of memories.

In an implementation, the memory 520 stores computer-readable instructions, and the computer-readable instructions include a plurality of software modules, for example, a sending module 521, a processing module 522, and a receiving module 523. After executing each software module, the processor 510 may perform a corresponding operation according to an indication of the software module. In this embodiment, an operation performed by a software module is actually an operation performed by the processor 510 according to an indication of the software module.

It should be understood that the central office device or the OLT in the method embodiments corresponding to FIG. 2, FIG. 3, and FIG. 4 may be based on the structure of the communication apparatus 50 shown in FIG. 5 in this embodiment.

For example, when the communication apparatus 50 is configured to perform the method of the central office device in the embodiment corresponding to FIG. 2, the receiving module 523 is configured to receive first identification information sent by a primary user-side device. The processing module 522 is configured to determine, based on the first identification information, a configuration mode in which the primary user-side device configures a secondary user-side device. The processing module 522 is further configured to encapsulate a first ONT/ONU management and control interface OMCI message based on the configuration mode. The sending module 521 is configured to send the first OMCI message to the primary user-side device, so that the primary user-side device configures the secondary user-side device based on the first identification information and configuration information that are carried in the first OMCI message.

For example, when the communication apparatus 50 is configured to perform the method of the OLT in the embodiment corresponding to FIG. 3, the receiving module 523 is configured to receive information about a secondary ONT and mode information that are sent by a primary ONT. The processing module 522 is configured to encapsulate an OMCI message 1 based on the information about the secondary ONT and the mode information that are sent by the primary ONT. The sending module 521 is configured to send the OMCI message 1 to the primary ONT.

For example, when the communication apparatus 50 is configured to perform the method of the OLT in the embodiment corresponding to FIG. 4, the receiving module 523 is configured to receive information about a secondary ONT and mode information that are sent by a primary ONT. The processing module 522 is configured to encapsulate an OMCI message 2 based on the information about the secondary ONT and the mode information that are sent by the primary ONT. The sending module 521 is configured to send the OMCI message 2 to the primary ONT.

For other descriptions, refer to the method of the central office device or the OLT in the embodiments corresponding to FIG. 2, FIG. 3, and FIG. 4. Details are not described herein again.

It should be further understood that the primary user-side device or the primary ONT in the method embodiments corresponding to FIG. 2, FIG. 3, and FIG. 4 may also be based on the structure of the communication apparatus 50 shown in FIG. 5 in this embodiment.

For example, when the communication apparatus 50 is configured to perform the method of the primary user-side device in the embodiment corresponding to FIG. 2, the receiving module 523 is configured to receive a first ONT/ONU management and control interface OMCI message from an optical line terminal OLT. The first OMCI message includes first identification information and configuration information, the first identification information indicates a to-be-configured secondary user-side device, and the configuration information is information for configuring the secondary user-side device. The processing module 522 is configured to: determine a configuration mode of the secondary user-side device based on the first identification information, process the configuration information based on the configuration mode, and configure the secondary user-side device corresponding to the first identification information.

For example, when the communication apparatus 50 is configured to perform the method of the primary ONT in the embodiment corresponding to FIG. 3, the processing module 522 is configured to obtain information about a secondary ONT connected to the primary ONT. The sending module 521 is configured to send the information about the secondary ONT and mode information to an OLT. The receiving module 523 is configured to receive an OMCI message 1 sent by the OLT. The processing module 522 is configured to: parse the OMCI message 1 to obtain configuration information of the secondary ONT from a message contents field of the OMCI message 1, and encapsulate, in a message 1, the configuration information of the secondary ONT and an instance identifier corresponding to the configuration information. The sending module 521 is further configured to send the message 1 to the secondary ONT.

For example, when the communication apparatus 50 is configured to perform the method of the primary ONT in the embodiment corresponding to FIG. 4, the processing module 522 is configured to: establish an OMCI channel between the primary ONT and a secondary ONT, and obtain information about the secondary ONT connected to the primary ONT. The sending module 521 is configured to send the information about the secondary ONT and mode information to an OLT. The receiving module 523 is configured to receive an OMCI message 2 sent by the OLT. The processing module 522 is configured to: parse the OMCI message 2 to obtain at least two fields from a message contents field of the OMCI message 2, and encapsulate an OMCI message 3 based on the information about the secondary ONT and the at least two fields. The sending module 521 is further configured to send the OMCI message 3 to the secondary ONT.

For other descriptions, refer to the method of the primary user-side device or the primary ONT in the embodiments corresponding to FIG. 2, FIG. 3, and FIG. 4. Details are not described herein again.

It should be further understood that the secondary user-side device or the secondary ONT in the method embodiments corresponding to FIG. 2, FIG. 3, and FIG. 4 may also be based on the structure of the communication apparatus 50 shown in FIG. 5 in this embodiment.

For example, when the communication apparatus 50 is configured to perform the method of the secondary ONT in the embodiment corresponding to FIG. 3, the receiving module 523 is configured to receive a message 1 sent by a primary ONT. The processing module 522 is configured to: parse the message 1 to obtain configuration information and an instance identifier corresponding to the configuration information in the message 1, and perform configuration based on an instance corresponding to the instance identifier. The sending module 521 is configured to send a response message 1 to the primary ONT.

For example, when the communication apparatus 50 is configured to perform the method of the secondary ONT in the embodiment corresponding to FIG. 4, the receiving module 523 is configured to receive an OMCI message 3 sent by a primary ONT. The processing module 522 is configured to: parse the OMCI message 3 to obtain configuration information and an instance identifier corresponding to the configuration information in the OMCI message 3, and perform configuration based on an instance corresponding to the instance identifier. The sending module 521 is configured to send a response message 3 to the primary ONT.

For other descriptions, refer to the method of the secondary user-side device or the secondary ONT in the embodiments corresponding to FIG. 2, FIG. 3, and FIG. 4. Details are not described herein again.

FIG. 6 is a schematic diagram of a structure of a communication apparatus 60 according to an embodiment of this application. All of the method embodiments corresponding to FIG. 2, FIG. 3, and FIG. 4 may be based on the structure of the communication apparatus 60 shown in FIG. 6.

The communication apparatus 60 includes a plurality of function modules. The function modules may be integrated into one processing unit, or each of the modules may exist alone physically, or two or more modules may be integrated into one unit. The integrated unit may be implemented in a form of hardware, or may be implemented in a form of a software functional unit.

Specifically, the communication apparatus 60 includes a transceiver module 601 and a processing module 602.

When the communication apparatus 60 performs the method of the primary user-side device or the primary ONT,
the transceiver module 601 is configured to receive a first ONT/ONU management and control interface OMCI message from an optical line terminal OLT, where the first OMCI message includes first identification information and configuration information, the first identification information indicates a to-be-configured secondary user-side device, and the configuration information is information for configuring the secondary user-side device; and
the processing module 602 is configured to: determine a configuration mode of the secondary user-side device based on the first identification information, process the configuration information based on the configuration mode, and configure the secondary user-side device corresponding to the first identification information.

In an optional implementation, the first identification information indicates an instance associated with the secondary user-side device, and the first identification information is encapsulated in a message identifier field of the first OMCI message. The processing module 602 is configured to: when an entity to which the instance indicated by the first identification information belongs is located in the secondary user-side device, determine that the configuration mode is a first mode. In the first mode, the processing module 602 is configured to configure the secondary user-side device based on the first identification information and the configuration information carried in a message contents field of the first OMCI message, and the first identification information further indicates an instance that is of the secondary user-side device and that is to be configured by using the configuration information. The processing module 602 is configured to: when an entity to which the instance indicated by the first identification information belongs is located in the primary user-side device, determine that the configuration mode is a second mode. In the second mode, the processing module 602 is configured to configure the secondary user-side device based on the configuration information carried in a message contents field of the first OMCI message and second identification information indicating an instance that is of the secondary user-side device and that is to be configured by using the configuration information.

In another optional implementation, the processing module 602 is configured to: parse the message contents field of the first OMCI message according to an OMCI protocol, to obtain content in the message contents field; encapsulate the content in the message contents field as a first message according to a protocol indicated by the configuration mode; and send the first message to the secondary user-side device according to the protocol indicated by the configuration mode.

In another optional implementation, the processing module 602 is configured to: when determining that no OMCI channel is established between the primary user-side device and the secondary user-side device, encapsulate the configuration information and the first identification information in the first message by using an Ethernet protocol or an IP protocol. The first message is an IP message or an Ethernet message. The processing module 602 is further configured to send the first message to the secondary user-side device according to the Ethernet protocol or the IP protocol, so that the secondary user-side device performs configuration according to the configuration information carried in the first message.

In another optional implementation, the processing module 602 is configured to: when determining that an OMCI channel is established between the primary user-side device and the secondary user-side device, encapsulate the configuration information and the first identification information in a second OMCI message according to the OMCI protocol. The configuration information is encapsulated in a message contents field of the second OMCI message, and the first identification information is encapsulated in a message identifier field of the second OMCI message. The processing module 602 is further configured to send the second OMCI message to the secondary user-side device according to the OMCI protocol, so that the secondary user-side device performs configuration according to the configuration information carried in the second OMCI message.

In another optional implementation, the processing module 602 includes a proxy submodule. The proxy submodule is configured to: re-encapsulate the content in the message contents field of the first OMCI message, and add fields such as a message header on the basis of the content in the message contents field to obtain a complete OMCI message through assembly. By using the proxy submodule, the processing module 602 can encapsulate a third OMCI message based on at least two OMCI message fields according to the OMCI protocol. A GEM header information field of the third OMCI message carries third identification information indicating an OMCI channel between the primary user-side device and the secondary user-side device. The processing module 602 is further configured to send the third OMCI message to the secondary user-side device according to the OMCI protocol, so that the secondary user-side device performs configuration according to the configuration information carried in the third OMCI message.

In another optional implementation, the transceiver module 601 is further configured to send, to the OLT, an association relationship between the first identification information and an instance identifier of a downstream PON port of the primary user-side device.

For other descriptions, refer to the method of the primary user-side device or the primary ONT in the embodiments corresponding to FIG. 2, FIG. 3, and FIG. 4. Details are not described herein again.

When the communication apparatus 60 performs the method of the central office device or the OLT,
the transceiver module 601 is configured to receive first identification information sent by a primary user-side device, where the first identification information indicates a to-be-configured secondary user-side device; and
the processing module 602 is configured to determine, based on the first identification information, a configuration mode in which the primary user-side device configures the secondary user-side device.

The processing module 602 is further configured to encapsulate a first ONT/ONU management and control interface OMCI message based on the configuration mode. The first OMCI message includes the first identification information and configuration information, and the configuration information is information for configuring the secondary user-side device.

The transceiver module 601 is further configured to send the first OMCI message to the primary user-side device, so that the primary user-side device configures the secondary user-side device based on the first identification information and the configuration information that are carried in the first OMCI message.

In an optional implementation, the processing module 602 is further configured to: when an entity to which an instance indicated by the first identification information belongs is located in the secondary user-side device, determine that the configuration mode is a first mode. The processing module 602 is further configured to: when an entity to which an instance indicated by the first identification information belongs is located in the primary user-side device, determine that the configuration mode is a second mode.

In another optional implementation, the processing module 602 is further configured to: determine the configuration information based on the first identification information, encapsulate the first identification information in a message identifier field of the first OMCI message, and encapsulate the configuration information in a message contents field of the first OMCI message.

In another optional implementation, the transceiver module 601 is further configured to receive second identification information sent by the primary user-side device. The second identification information indicates an instance that is of the secondary user-side device and that is to be configured by using the configuration information. The processing module 602 is further configured to: determine the configuration information based on the second identification information, where the configuration information is for configuring the instance indicated by the second identification information; encapsulate the first identification information in a message identifier field of the first OMCI message, and encapsulate, in a message contents field of the first OMCI message, at least two OMCI message fields in which the configuration information and the second identification information are encapsulated.

For other descriptions, refer to the method of the central office device or the OLT in the embodiments corresponding to FIG. 2, FIG. 3, and FIG. 4. Details are not described herein again.

In an implementation process, the steps of the foregoing methods may be implemented by using an integrated logical circuit of hardware in the processor or by using instructions in a form of software. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps of the foregoing methods in combination with hardware of the processor. To avoid repetition, details are not described herein again. It should be further understood that "first", "second", "third", "fourth", and various numbers in this specification are merely used for differentiation for ease of description, and are not intended to limit the scope of embodiments of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by persons skilled in the art that, for the purpose of convenient and brief description, for a detailed working process of the foregoing system, apparatus, and unit, refer to a corresponding process in the foregoing method embodiments. Details are not described herein again.

Although this application is described in detail with reference to the foregoing embodiments, persons of ordinary skill in the art should understand that they may still make modifications to the technical solutions described in the foregoing embodiments within the protection scope of the claims as determined according to Art. 84 EPC and Art. 69(1) of the EPC protocol.

## Claims

1. A multi-level passive optical network, PON, management method, comprising:
receiving (304, 405), by a primary user-side device, a first ONT/ONU management and control interface OMCI message from an optical line terminal, OLT, (101), wherein the first OMCI message comprises first identification information and configuration information, the first identification information indicates a to-be-configured secondary user-side device, and the configuration information is information for configuring the secondary user-side device;
determining (305, 406), by the primary user-side device, a configuration mode of the secondary user-side device based on the first identification information; and
processing (306, 407), by the primary user-side device, the configuration information based on the configuration mode, and configuring (307, 408) the secondary user-side device corresponding to the first identification information.

2. The method according to claim 1, wherein the first identification information indicates an instance associated with the secondary user-side device, and the first identification information is encapsulated in a message identifier field of the first OMCI message; and
the determining (305, 406), by the primary user-side device, a configuration mode of the secondary user-side device based on the first identification information comprises:
when an entity to which the instance indicated by the first identification information belongs is located in the secondary user-side device, determining, by the primary user-side device, that the configuration mode is a first mode, wherein in the first mode, the primary user-side device configures the secondary user-side device based on the first identification information and the configuration information carried in a message contents field of the first OMCI message, and the first identification information further indicates an instance that is of the secondary user-side device and that is to be configured by using the configuration information; or
when an entity to which the instance indicated by the first identification information belongs is located in the primary user-side device, determining, by the primary user-side device, that the configuration mode is a second mode, wherein in the second mode, the primary user-side device configures the secondary user-side device based on the configuration information carried in a message contents field of the first OMCI message and second identification information indicating an instance that is of the secondary user-side device and that is to be configured by using the configuration information.

3. The method according to claim 2, wherein the processing (306, 407), by the primary user-side device, the configuration information based on the configuration mode, and configuring (307, 408) the secondary user-side device corresponding to the first identification information comprises:
parsing (305, 306), by the primary user-side device, the message contents field of the first OMCI message according to an OMCI protocol, to obtain content in the message contents field, wherein the content in the message contents field comprises the configuration information or an OMCI message field carrying the configuration information;
encapsulating (306, 407), by the primary user-side device, the content in the message contents field in a first message according to a protocol indicated by the configuration mode; and
sending (307, 408), by the primary user-side device, the first message to the secondary user-side device according to the protocol indicated by the configuration mode.

4. The method according to claim 3, wherein the entity to which the instance indicated by the first identification information belongs is located in the secondary user-side device, the first message comprises the first identification information and the configuration information, and the configuration information is for configuring the instance indicated by the first identification information.

5. The method according to claim 3, wherein the entity to which the instance indicated by the first identification information belongs is located in the primary user-side device, the first message comprises the second identification information and the configuration information, and the configuration information is for configuring the instance indicated by the second identification information.

6. The method according to claim 4, wherein the content in the message contents field is the configuration information;
the encapsulating (306, 407), by the primary user-side device, the content in the message contents field as a first message according to a protocol indicated by the configuration mode comprises:
when determining that no OMCI channel is established between the primary user-side device and the secondary user-side device, encapsulating, by the primary user-side device, the configuration information and the first identification information in the first message according to an Ethernet protocol or an IP protocol, wherein the first message is an IP message or an Ethernet message; and
the sending (307, 408), by the primary user-side device, the first message to the secondary user-side device according to the protocol indicated by the configuration mode comprises:
sending (307, 408), by the primary user-side device, the first message to the secondary user-side device according to the Ethernet protocol or the IP protocol, so that the secondary user-side device performs configuration according to the configuration information carried in the first message.

7. The method according to claim 4, wherein the content in the message contents field is the configuration information, and the first message is a second OMCI message;
the encapsulating (306, 407), by the primary user-side device, the content in the message contents field as a first message according to a protocol indicated by the configuration mode comprises:
when determining that an OMCI channel is established between the primary user-side device and the secondary user-side device, encapsulating, by the primary user-side device, the configuration information and the first identification information in the second OMCI message according to the OMCI protocol, wherein the configuration information is encapsulated in a message contents field of the second OMCI message, and the first identification information is encapsulated in a message identifier field of the second OMCI message; and
the sending (307, 408), by the primary user-side device, the first message to the secondary user-side device according to the protocol indicated by the configuration mode comprises:
sending (307, 408), by the primary user-side device, the second OMCI message to the secondary user-side device according to the OMCI protocol, so that the secondary user-side device performs configuration according to the configuration information carried in the second OMCI message.

8. A multi-level passive optical network, PON, management method, comprising:
receiving (302, 403), by an optical line terminal, OLT, (101), first identification information sent by a primary user-side device, wherein the first identification information indicates a to-be-configured secondary user-side device;
determining, by the OLT based on the first identification information, a configuration mode in which the primary user-side device configures the secondary user-side device;
encapsulating ((303, 404), by the OLT, a first ONT/ONU management and control interface OMCI message based on the configuration mode, wherein the first OMCI message comprises the first identification information and configuration information, and the configuration information is information for configuring the secondary user-side device; and
sending (304, 405), by the OLT, the first OMCI message to the primary user-side device, so that the primary user-side device configures the secondary user-side device based on the first identification information and the configuration information that are carried in the first OMCI message.

9. The method according to claim 8, wherein the first identification information indicates an instance associated with the secondary user-side device; and
the determining, by the OLT based on the first identification information, a configuration mode in which the primary user-side device configures the secondary user-side device comprises:
when an entity to which the instance indicated by the first identification information belongs is located in the secondary user-side device, determining, by the OLT, that the configuration mode is a first mode, wherein in the first mode, the OLT encapsulates the configuration information in a message contents field of the first OMCI message, and the first identification information further indicates an instance that is of the secondary user-side device and that is to be configured by using the configuration information; or
when an entity to which the instance indicated by the first identification information belongs is located in the primary user-side device, determining, by the OLT, that the configuration mode is a second mode, wherein in the second mode, the OLT encapsulates, in the message contents field of the first OMCI message, both a field in which the configuration information is encapsulated and a field in which second identification information is encapsulated, and the second identification information indicates an instance that is of the secondary user-side device and that is to be configured by using the configuration information.

10. The method according to claim 9, wherein the configuration mode for processing the configuration information is the first mode;
before the encapsulating (303, 404), by the OLT, a first OMCI message based on the configuration mode, the method further comprises:
determining, by the OLT, the configuration information based on the first identification information; and
the encapsulating (303, 404), by the OLT, a first OMCI message based on the configuration mode comprises:
encapsulating (303, 404), by the OLT, the first identification information in a message identifier field of the first OMCI message, and encapsulating (303, 403) the configuration information in the message contents field of the first OMCI message.

11. A primary user-side device, comprising a processor (510), wherein the processor (510) is coupled to a memory (520), the memory (520) stores a program, and when program instructions stored in the memory (520) are executed by the processor (510), the primary user-side device is enabled to implement the method according to any one of claims 1 to 7.

12. An optical line terminal,OLT, comprising a processor (510), wherein the processor (510) is coupled to a memory (520), the memory (520) stores a program, and when program instructions stored in the memory (520) are executed by the processor (510), the primary user-side device is enabled to implement the method according to any one of claims 8 to 10.

## Patentansprüche

1. Verwaltungsverfahren für mehrstufige passive optische Netzwerke (PON), das umfasst:
Empfangen (304, 405), durch eine primäre benutzerseitige Vorrichtung, einer ersten ONT/ONU-Verwaltungs- und Steuerungsschnittstellen(OMCI)-Nachricht von einem optischen Leitungsterminal (OLT) (101), wobei die erste OMCI-Nachricht erste Identifikationsinformationen und Konfigurationsinformationen umfasst, die ersten Identifikationsinformationen eine zu konfigurierende sekundäre benutzerseitige Vorrichtung angeben und die Konfigurationsinformationen Informationen zum Konfigurieren der sekundären benutzerseitigen Vorrichtung sind;
Bestimmen (305, 406), durch die primäre benutzerseitige Vorrichtung, eines Konfigurationsmodus der sekundären benutzerseitigen Vorrichtung basierend auf den ersten Identifikationsinformationen; und
Verarbeiten (306, 407), durch die primäre benutzerseitige Vorrichtung, der Konfigurationsinformationen basierend auf dem Konfigurationsmodus, und Konfigurieren (307, 408) der sekundären benutzerseitigen Vorrichtung entsprechend den ersten Identifikationsinformationen.

2. Verfahren nach Anspruch 1, wobei die ersten Identifikationsinformationen eine Instanz, die mit der sekundären benutzerseitigen Vorrichtung verknüpft ist, angeben und die ersten Identifikationsinformationen in einem Nachrichtenidentifizierungsfeld der ersten OMCI-Nachricht eingekapselt sind; und
das Bestimmen (305, 406), durch die primäre benutzerseitige Vorrichtung, eines Konfigurationsmodus der sekundären benutzerseitigen Vorrichtung basierend auf den ersten Identifikationsinformationen umfasst:
wenn sich eine Entität, zu der die Instanz, die durch die ersten Identifikationsinformationen angegeben wird, gehört, in der sekundären benutzerseitigen Vorrichtung befindet, Bestimmen, durch die primäre benutzerseitige Vorrichtung, dass der Konfigurationsmodus ein erster Modus ist, wobei in dem ersten Modus die primäre benutzerseitige Vorrichtung die sekundäre benutzerseitige Vorrichtung basierend auf den ersten Identifikationsinformationen und den Konfigurationsinformationen, die in einem Nachrichteninhaltsfeld der ersten OMCI-Nachricht übertragen werden, konfiguriert, und die ersten Identifikationsinformationen ferner eine Instanz, die von der sekundären benutzerseitigen Vorrichtung ist und die durch Verwenden der Konfigurationsinformationen konfiguriert werden soll, angeben; oder
wenn sich eine Entität, zu der die Instanz, die durch die ersten Identifikationsinformationen angegeben wird, gehört, in der primären benutzerseitigen Vorrichtung befindet, Bestimmen, durch die primäre benutzerseitige Vorrichtung, dass der Konfigurationsmodus ein zweiter Modus ist, wobei in dem zweiten Modus die primäre benutzerseitige Vorrichtung die sekundäre benutzerseitige Vorrichtung basierend auf den Konfigurationsinformationen, die in einem Nachrichteninhaltsfeld der ersten OMCI-Nachricht übertragen werden, und zweiten Identifikationsinformationen konfiguriert, die eine Instanz, die von der sekundären benutzerseitigen Vorrichtung ist und die durch Verwenden der Konfigurationsinformationen konfiguriert werden soll, angeben.

3. Verfahren nach Anspruch 2, wobei das Verarbeiten (306, 407), durch die primäre benutzerseitige Vorrichtung, der Konfigurationsinformationen basierend auf dem Konfigurationsmodus und das Konfigurieren (307, 408) der sekundären benutzerseitigen Vorrichtung entsprechend den ersten Identifikationsinformationen umfasst:
Parsen (305, 306), durch die primäre benutzerseitige Vorrichtung, des Nachrichteninhaltsfelds der ersten OMCI-Nachricht gemäß einem OMCI-Protokoll, um Inhalt in dem Nachrichteninhaltsfeld zu erhalten, wobei der Inhalt in dem Nachrichteninhaltsfeld die Konfigurationsinformationen oder ein OMCI-Nachrichtenfeld, das die Konfigurationsinformationen überträgt, umfasst;
Einkapseln (306, 407), durch die primäre benutzerseitige Vorrichtung, des Inhalts in dem Nachrichteninhaltsfeld in einer ersten Nachricht gemäß einem Protokoll, das durch den Konfigurationsmodus angegeben wird; und
Senden (307, 408), durch die primäre benutzerseitige Vorrichtung, der ersten Nachricht an die sekundäre benutzerseitige Vorrichtung gemäß dem Protokoll, das durch den Konfigurationsmodus angegeben wird.

4. Verfahren nach Anspruch 3, wobei sich die Entität, zu der die Instanz, die durch die ersten Identifikationsinformationen angegeben wird, gehört, in der sekundären benutzerseitigen Vorrichtung befindet, die erste Nachricht die ersten Identifikationsinformationen und die Konfigurationsinformationen umfasst und die Konfigurationsinformationen zum Konfigurieren der Instanz, die durch die ersten Identifikationsinformationen angegeben wird, dienen.

5. Verfahren nach Anspruch 3, wobei sich die Entität, zu der die Instanz, die durch die ersten Identifikationsinformationen angegeben wird, gehört, in der primären benutzerseitigen Vorrichtung befindet, die erste Nachricht die zweiten Identifikationsinformationen und die Konfigurationsinformationen umfasst und die Konfigurationsinformationen zum Konfigurieren der Instanz, die durch die zweiten Identifikationsinformationen angegeben wird, dienen.

6. Verfahren nach Anspruch 4, wobei der Inhalt in dem Nachrichteninhaltsfeld die Konfigurationsinformationen sind;
das Einkapseln (306, 407), durch die primäre benutzerseitige Vorrichtung, des Inhalts in dem Nachrichteninhaltsfeld als eine erste Nachricht gemäß einem Protokoll, das durch den Konfigurationsmodus angegeben wird, umfasst:
wenn bestimmt wird, dass kein OMCI-Kanal zwischen der primären benutzerseitigen Vorrichtung und der sekundären benutzerseitigen Vorrichtung hergestellt ist, Einkapseln, durch die primäre benutzerseitige Vorrichtung, der Konfigurationsinformationen und der ersten Identifikationsinformationen in der ersten Nachricht gemäß einem Ethernet-Protokoll oder einem IP-Protokoll, wobei die erste Nachricht eine IP-Nachricht oder eine Ethernet-Nachricht ist; und
das Senden (307, 408), durch die primäre benutzerseitige Vorrichtung, der ersten Nachricht an die sekundäre benutzerseitige Vorrichtung gemäß dem Protokoll, das durch den Konfigurationsmodus angegeben wird, umfasst:
Senden (307, 408), durch die primäre benutzerseitige Vorrichtung, der ersten Nachricht an die sekundäre benutzerseitige Vorrichtung gemäß dem Ethernet-Protokoll oder dem IP-Protokoll, sodass die sekundäre benutzerseitige Vorrichtung die Konfiguration gemäß den Konfigurationsinformationen, die in der ersten Nachricht übertragen werden, durchführt.

7. Verfahren nach Anspruch 4, wobei der Inhalt in dem Nachrichteninhaltsfeld die Konfigurationsinformationen sind und die erste Nachricht eine zweite OMCI-Nachricht ist;
das Einkapseln (306, 407), durch die primäre benutzerseitige Vorrichtung, des Inhalts in dem Nachrichteninhaltsfeld als eine erste Nachricht gemäß einem Protokoll, das durch den Konfigurationsmodus angegeben wird, umfasst:
wenn bestimmt wird, dass ein OMCI-Kanal zwischen der primären benutzerseitigen Vorrichtung und der sekundären benutzerseitigen Vorrichtung hergestellt ist, Einkapseln, durch die primäre benutzerseitige Vorrichtung, der Konfigurationsinformationen und der ersten Identifikationsinformationen in der zweiten OMCI-Nachricht gemäß dem OMCI-Protokoll, wobei die Konfigurationsinformationen in einem Nachrichteninhaltsfeld der zweiten OMCI-Nachricht eingekapselt sind und die ersten Identifikationsinformationen in einem Nachrichtenidentifizierungsfeld der zweiten OMCI-Nachricht eingekapselt sind; und
das Senden (307, 408), durch die primäre benutzerseitige Vorrichtung, der ersten Nachricht an die sekundäre benutzerseitige Vorrichtung gemäß dem Protokoll, das durch den Konfigurationsmodus angegeben wird, umfasst:
Senden (307, 408), durch die primäre benutzerseitige Vorrichtung, der zweiten OMCI-Nachricht an die sekundäre benutzerseitige Vorrichtung gemäß dem OMCI-Protokoll, sodass die sekundäre benutzerseitige Vorrichtung die Konfiguration gemäß den Konfigurationsinformationen, die in der zweiten OMCI-Nachricht übertragen werden, durchführt.

8. Verwaltungsverfahren für mehrstufige passive optische Netzwerke (PON), das umfasst:
Empfangen (302, 403), durch ein optisches Leitungsterminal (OLT) (101), von ersten Identifikationsinformationen, die durch eine primäre benutzerseitige Vorrichtung gesendet werden, wobei die ersten Identifikationsinformationen eine zu konfigurierende sekundäre benutzerseitige Vorrichtung angeben;
Bestimmen, durch das OLT basierend auf den ersten Identifikationsinformationen, eines Konfigurationsmodus, in dem die primäre benutzerseitige Vorrichtung die sekundäre benutzerseitige Vorrichtung konfiguriert;
Einkapseln ((303, 404), durch das OLT, einer ersten ONT/ONU-Verwaltungs- und Steuerungsschnittstellen(OMCI)-Nachricht basierend auf dem Konfigurationsmodus, wobei die erste OMCI-Nachricht die ersten Identifikationsinformationen und
Konfigurationsinformationen umfasst und die Konfigurationsinformationen Informationen zum Konfigurieren der sekundären benutzerseitigen Vorrichtung sind; und
Senden (304, 405), durch das OLT, der ersten OMCI-Nachricht an die primäre benutzerseitige Vorrichtung, sodass die primäre benutzerseitige Vorrichtung die sekundäre benutzerseitige Vorrichtung basierend auf den ersten Identifikationsinformationen und den Konfigurationsinformationen, die in der ersten OMCI-Nachricht übertragen werden, konfiguriert.

9. Verfahren nach Anspruch 8, wobei die ersten Identifikationsinformationen eine Instanz, die mit der sekundären benutzerseitigen Vorrichtung verknüpft ist, angeben; und
das Bestimmen, durch das OLT basierend auf den ersten Identifikationsinformationen, eines Konfigurationsmodus, in dem die primäre benutzerseitige Vorrichtung die sekundäre benutzerseitige Vorrichtung konfiguriert, umfasst:
wenn sich eine Entität, zu der die Instanz, die durch die ersten Identifikationsinformationen angegeben wird, gehört, in der sekundären benutzerseitigen Vorrichtung befindet, Bestimmen, durch das OLT, dass der Konfigurationsmodus ein erster Modus ist, wobei das OLT in dem ersten Modus die Konfigurationsinformationen in ein Nachrichteninhaltsfeld der ersten OMCI-Nachricht einkapselt und die ersten Identifikationsinformationen ferner eine Instanz, die von der sekundären benutzerseitigen Vorrichtung sind und die durch Verwenden der Konfigurationsinformationen konfiguriert werden soll, angeben; oder
wenn sich eine Entität, zu der die Instanz, die durch die ersten Identifikationsinformationen angegeben wird, gehört, in der primären benutzerseitigen Vorrichtung befindet, Bestimmen, durch das OLT, dass der Konfigurationsmodus ein zweiter Modus ist, wobei das OLT in dem zweiten Modus in dem Nachrichteninhaltsfeld der ersten OMCI-Nachricht sowohl ein Feld, in dem die Konfigurationsinformationen eingekapselt sind, als auch ein Feld, in dem zweite Identifikationsinformationen eingekapselt sind, einkapselt und die zweiten Identifikationsinformationen eine Instanz, die von der sekundären benutzerseitigen Vorrichtung ist und die durch Verwenden der Konfigurationsinformationen konfiguriert werden soll, angeben.

10. Verfahren nach Anspruch 9, wobei der Konfigurationsmodus zum Verarbeiten der Konfigurationsinformationen der erste Modus ist;
vor dem Einkapseln (303, 404), durch das OLT, einer ersten OMCI-Nachricht basierend auf dem Konfigurationsmodus, das Verfahren ferner umfasst:
Bestimmen, durch das OLT, der Konfigurationsinformationen basierend auf den ersten Identifikationsinformationen; und
das Einkapseln (303, 404), durch das OLT, einer ersten OMCI-Nachricht basierend auf dem Konfigurationsmodus umfasst:
Einkapseln (303, 404), durch das OLT, der ersten Identifikationsinformationen in einem Nachrichtenidentifikationsfeld der ersten OMCI-Nachricht und Einkapseln (303, 403) der Konfigurationsinformationen in dem Nachrichteninhaltsfeld der ersten OMCI-Nachricht.

11. Primäre benutzerseitige Vorrichtung, die einen Prozessor (510) umfasst, wobei der Prozessor (510) mit einem Speicher (520) gekoppelt ist, der Speicher (520) ein Programm speichert, und wenn Programmanweisungen, die in dem Speicher (520) gespeichert sind, durch den Prozessor (510) ausgeführt werden, die primäre benutzerseitige Vorrichtung aktiviert wird, um das Verfahren nach einem der Ansprüche 1 bis 7 zu implementieren.

12. Optisches Leitungsterminal (OLT), das einen Prozessor (510) umfasst, wobei der Prozessor (510) mit einem Speicher (520) gekoppelt ist, der Speicher (520) ein Programm speichert, und wenn Programmanweisungen, die in dem Speicher (520) gespeichert sind, durch den Prozessor (510) ausgeführt werden, die primäre benutzerseitige Vorrichtung aktiviert wird, um das Verfahren nach einem der Ansprüche 8 bis 10 zu implementieren.

## Revendications

1. Procédé de gestion d'un réseau optique passif, PON, à niveaux multiples, comprenant :
la réception (304, 405), par un dispositif côté utilisateur primaire, d'un premier message OMCI d'interface de gestion et de commande ONT/ONU en provenance d'un terminal de ligne optique, OLT, (101), dans lequel le premier message OMCI comprend des premières informations d'identification et des informations de configuration, les premières informations d'identification indiquent un dispositif côté utilisateur secondaire à configurer, et les informations de configuration sont des informations permettant de configurer le dispositif côté utilisateur secondaire ;
la détermination (305, 406), par le dispositif côté utilisateur primaire, d'un mode de configuration du dispositif côté utilisateur secondaire sur la base des premières informations d'identification ; et
le traitement (306, 407), par le dispositif côté utilisateur primaire, des informations de configuration sur la base du mode de configuration, et la configuration (307, 408) du dispositif côté utilisateur secondaire correspondant aux premières informations d'identification.

2. Procédé selon la revendication 1, dans lequel les premières informations d'identification indiquent une instance associée au dispositif côté utilisateur secondaire, et les premières informations d'identification sont encapsulées dans un champ d'identificateur de message du premier message OMCI ; et
la détermination (305, 406), par le dispositif côté utilisateur primaire, d'un mode de configuration du dispositif côté utilisateur secondaire sur la base des premières informations d'identification comprend :
lorsqu'une entité à laquelle appartient l'instance indiquée par les premières informations d'identification est située dans le dispositif côté utilisateur secondaire, le fait de déterminer, par le dispositif côté utilisateur primaire, que le mode de configuration est un premier mode, dans lequel, dans le premier mode, le dispositif côté utilisateur primaire configure le dispositif côté utilisateur secondaire sur la base des premières informations d'identification et des informations de configuration contenues dans un champ de contenus de message du premier message OMCI, et les premières informations d'identification indiquent en outre une instance du dispositif côté utilisateur secondaire devant être configurée en utilisant des informations de configuration ; ou
lorsqu'une entité à laquelle appartient l'instance indiquée par les premières informations d'identification est située dans le dispositif côté utilisateur primaire, le fait de déterminer, par le dispositif côté utilisateur primaire, que le mode de configuration est un second mode, dans lequel, dans le second mode, le dispositif côté utilisateur primaire configure le dispositif côté utilisateur secondaire sur la base des informations de configuration contenues dans un champ de contenus de message du premier message OMCI et de secondes informations d'identification indiquant une instance du dispositif côté utilisateur secondaire devant être configurée en utilisant les informations de configuration.

3. Procédé selon la revendication 2, dans lequel le traitement (306, 407), par le dispositif côté utilisateur primaire, des informations de configuration sur la base du mode de configuration, et la configuration (307, 408) du dispositif côté utilisateur secondaire correspondant aux premières informations d'identification comprennent :
l'analyse (305, 306), par le dispositif côté utilisateur primaire, du champ de contenus de message du premier message OMCI selon un protocole OMCI, afin d'obtenir un contenu dans le champ de contenus de message, dans lequel le contenu dans le champ de contenus de message comprend les informations de configuration ou un champ de message OMCI contenant les informations de configuration ;
l'encapsulation (306, 407), par le dispositif côté utilisateur primaire, du contenu dans le champ de contenus de message dans un premier message selon un protocole indiqué par le mode de configuration ; et
l'envoi (307, 408), par le dispositif côté utilisateur primaire, du premier message au dispositif côté utilisateur secondaire selon le protocole indiqué par le mode de configuration.

4. Procédé selon la revendication 3, dans lequel l'entité à laquelle appartient l'instance indiquée par les premières informations d'identification est située dans le dispositif côté utilisateur secondaire, le premier message comprend les premières informations d'identification et les informations de configuration, et les informations de configuration sont destinées à configurer l'instance indiquée par les premières informations d'identification.

5. Procédé selon la revendication 3, dans lequel l'entité à laquelle appartient l'instance indiquée par les premières informations d'identification est située dans le dispositif côté utilisateur primaire, le premier message comprend les secondes informations d'identification et les informations de configuration, et les informations de configuration sont destinées à configurer l'instance indiquée par les secondes informations d'identification.

6. Procédé selon la revendication 4, dans lequel le contenu dans le champ de contenus de message correspond aux informations de configuration ;
l'encapsulation (306, 407), par le dispositif côté utilisateur primaire, du contenu dans le champ de contenus de message en tant que premier message selon un protocole indiqué par le mode de configuration comprend :
lorsqu'il est déterminé qu'aucun canal OMCI n'est établi entre le dispositif côté utilisateur primaire et le dispositif côté utilisateur secondaire, l'encapsulation, par le dispositif côté utilisateur primaire, des informations de configuration et des premières informations d'identification dans le premier message selon un protocole Ethernet ou un protocole IP, dans lequel le premier message est un message IP ou un message Ethernet ; et
l'envoi (307, 408), par le dispositif côté utilisateur primaire, du premier message au dispositif côté utilisateur secondaire selon le protocole indiqué par le mode de configuration comprend :
l'envoi (307, 408), par le dispositif côté utilisateur primaire, du premier message au dispositif côté utilisateur secondaire selon le protocole Ethernet ou le protocole IP, de sorte que le dispositif côté utilisateur secondaire réalise une configuration selon les informations de configuration contenues dans le premier message.

7. Procédé selon la revendication 4, dans lequel le contenu dans le champ de contenus de message correspond aux informations de configuration, et le premier message est un second message OMCI ;
l'encapsulation (306, 407), par le dispositif côté utilisateur primaire, du contenu dans le champ de contenus de message en tant que premier message selon un protocole indiqué par le mode de configuration comprend :
lorsqu'il détermine qu'un canal OMCI est établi entre le dispositif côté utilisateur primaire et le dispositif côté utilisateur secondaire, l'encapsulation, par le dispositif côté utilisateur primaire, des informations de configuration et des premières informations d'identification dans le second message OMCI selon le protocole OMCI, dans lequel les informations de configuration sont encapsulées dans un champ de contenus de message du second message OMCI, et les premières informations d'identification sont encapsulées dans un champ d'identificateur de message du second message OMCI ; et
l'envoi (307, 408), par le dispositif côté utilisateur primaire, du premier message au dispositif côté utilisateur secondaire selon le protocole indiqué par le mode de configuration comprend :
l'envoi (307, 408), par le dispositif côté utilisateur primaire, du second message OMCI au dispositif côté utilisateur secondaire selon le protocole OMCI, de sorte que le dispositif côté utilisateur secondaire réalise une configuration selon les informations de configuration contenues dans le second message OMCI.

8. Procédé de gestion d'un réseau optique passif, PON, à niveaux multiples, comprenant :
la réception (302, 403), par un terminal de ligne optique, OLT, (101), de premières informations d'identification envoyées par un dispositif côté utilisateur primaire, dans lequel les premières informations d'identification indiquent un dispositif côté utilisateur secondaire à configurer ;
la détermination, par l'OLT sur la base des premières informations d'identification, d'un mode de configuration dans lequel le dispositif côté utilisateur primaire configure le dispositif côté utilisateur secondaire ;
l'encapsulation ((303, 404), par l'OLT, d'un premier message OMCI d'interface de gestion et de commande ONT/ONU sur la base du mode de configuration, dans lequel le premier message OMCI comprend les premières informations d'identification et des informations de configuration, et les informations de configuration sont des informations permettant de configurer le dispositif côté utilisateur secondaire ; et
l'envoi (304, 405), par l'OLT, du premier message OMCI au dispositif côté utilisateur primaire, de sorte que le dispositif côté utilisateur primaire configure le dispositif côté utilisateur secondaire sur la base des premières informations d'identification et des informations de configuration qui sont contenues dans le premier message OMCI.

9. Procédé selon la revendication 8, dans lequel les premières informations d'identification indiquent une instance associée au dispositif côté utilisateur secondaire ; et
la détermination, par l'OLT sur la base des premières informations d'identification, d'un mode de configuration dans lequel le dispositif côté utilisateur primaire configure le dispositif côté utilisateur secondaire comprend :
lorsqu'une entité à laquelle appartient l'instance indiquée par les premières informations d'identification est située dans le dispositif côté utilisateur secondaire, le fait de déterminer, par l'OLT, que le mode de configuration est un premier mode, dans lequel, dans le premier mode, l'OLT encapsule les informations de configuration dans un champ de contenus de message du premier message OMCI, et les premières informations d'identification indiquent en outre une instance du dispositif côté utilisateur secondaire et devant être configurée en utilisant les informations de configuration ; ou
lorsqu'une entité à laquelle appartient l'instance indiquée par les premières informations d'identification est située dans le dispositif côté utilisateur primaire, le fait de déterminer, par l'OLT, que le mode de configuration est un second mode, dans lequel, dans le second mode, l'OLT encapsule, dans le champ de contenus de message du premier message OMCI, à la fois un champ dans lequel les informations de configuration sont encapsulées et un champ dans lequel des secondes informations d'identification sont encapsulées, et les secondes informations d'identification indiquent une instance du dispositif côté utilisateur secondaire devant être configurée en utilisant les informations de configuration.

10. Procédé selon la revendication 9, dans lequel le mode de configuration pour le traitement des informations de configuration est le premier mode;
avant l'encapsulation (303, 404), par l'OLT, d'un premier message OMCI sur la base du mode de configuration, le procédé comprend en outre :
la détermination, par l'OLT, des informations de configuration sur la base des premières informations d'identification ; et
l'encapsulation (303, 404), par l'OLT, d'un premier message OMCI sur la base du mode de configuration comprend :
l'encapsulation (303, 404), par l'OLT, des premières informations d'identification dans un champ d'identificateur de message du premier message OMCI, et
l'encapsulation (303, 403) des informations de configuration dans le champ de contenus de message du premier message OMCI.

11. Dispositif côté utilisateur primaire, comprenant un processeur (510), dans lequel le processeur (510) est couplé à une mémoire (520), la mémoire (520) stocke un programme, et lorsque des instructions de programme stockées dans la mémoire (520) sont exécutées par le processeur (510), le dispositif côté utilisateur primaire est en mesure de mettre en œuvre le procédé selon l'une quelconque des revendications 1 à 7.

12. Terminal de ligne optique, OLT, comprenant un processeur (510), dans lequel le processeur (510) est couplé à une mémoire (520), la mémoire (520) stocke un programme, et lorsque des instructions de programme stockées dans la mémoire (520) sont exécutées par le processeur (510), le dispositif côté utilisateur primaire est en mesure de mettre en œuvre le procédé selon l'une quelconque des revendications 8 à 10.
